(19) Europäisches Patentamt
European Patent Office
Office européen des brevets

(11) Publication number: **0 253 405 B1**

(12) **EUROPEAN PATENT SPECIFICATION**

(45) Date of publication of patent specification: **11.08.93**

(51) Int. Cl.[5]: **C08G 59/22**, C08G 59/18, C08G 59/14, C08G 59/16, C09D 5/44

(21) Application number: **87110375.0**

(22) Date of filing: **17.07.87**

The file contains technical information submitted after the application was filed and not included in this specification

(54) **Cationic, advanced epoxy resin compositions.**

(30) Priority: **18.07.86 US 887849**
**02.07.87 US 69459**

(43) Date of publication of application:
**20.01.88 Bulletin 88/03**

(45) Publication of the grant of the patent:
**11.08.93 Bulletin 93/32**

(84) Designated Contracting States:
**AT BE CH DE ES FR GB IT LI LU NL SE**

(56) References cited:
**EP-A- 0 193 809**
**GB-A- 1 527 258**
**GB-A- 2 001 324**
**GB-A- 2 167 071**
**US-A- 4 339 369**
**US-A- 4 608 405**

**SAE Technical Paper Series, p. 75-80;**

**Electropainting, 2nd Ed. October 1970, chapter 2, pages 29-30, (R.L Yeates)**

**F.Beck: "Comprehensive Treatise of Electrochemistry", Vol. 2, CH. 10, pages 553-554.**

**Product Data bulletin "Araldite" GT 7074**

**Product data bulletin "Araldite" GT 7097**

(73) Proprietor: **THE DOW CHEMICAL COMPANY**
**2030 Dow Center Abbott Road P.O. Box 1967**
**Midland Michigan 48640-1967(US)**

(72) Inventor: **Anderson, Kenneth W.**
**102 Daffodil**
**Lake Jackson Texas 77566(US)**
Inventor: **Hickner, Richard A.**
**334 Linden Lane**
**Lake Jackson Texas 77566(US)**
Inventor: **Rao, Nancy A.**
**114 Daffodil**
**Lake Jackson Texas 77566(US)**

(74) Representative: **Casalonga, Axel et al**
**BUREAU D.A. CASALONGA - JOSSE Morassistrasse 8**
**W-8000 München 5 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 253 405 B1

## Description

The invention is concerned with cationic, advanced epoxy resin compositions, a method for their preparation and the use of such compositions in cathodic electrodeposition.

Electrodeposition has become an important method for the application of coatings over the last two decades and continues to grow in popularity because of its efficiency, uniformity and environmental acceptance. Cathodic electrodeposition has become dominant in areas where highly corrosion-resistant coatings are required, such as in primers for automobile bodies and parts. Epoxy based systems provide the best overall performance in this application and are widely used.

Cathodic electrodeposition resins based on conventional epoxies obtained by reacting liquid diglycidyl ethers of bisphenol A with bisphenol A to produce higher molecular weight epoxy resins have known disadvantages. Such products tend to have excessively high softening points resulting in poor flow out. In addition, such products require excessive amounts of solvent during their preparation. In order to improve flow, it has been proposed to modify such conventional epoxy resins by reaction with a diol in the presence of a tertiary amine catalyst. Thus, Bosso et al., United States Patent 3,839,252, describes modification with polypropylene glycol. Marchetti et al., United States Patent 3,947,339, teaches modification with polyesterdiols or polytetramethylene glycols. Wismer et al., United States Patent 4,419,467, describes still another modification with diols derived from cyclic polyols reacted with ethylene oxide. These various modifications, however, also have disadvantages. Tertiary amines or strong bases are required to effect the reaction between the primary alcohols and the epoxy groups involved. Furthermore, these reactions require long cook times and are subject to gellation because of competitive polymerization of the epoxy groups by the base catalyst. In addition epoxy resins containing low levels of chlorine are required to prevent deactivation of this catalyst.

Many coating formulations applied by electrodeposition include pigments to provide color, or opacity or application or film properties. United States Patent 3,936,405, Sturni et al., describes pigment grinding vehicles especially useful in preparing stable, aqueous pigment dispersions for water-dispersible coating systems, particularly for application by electrodeposition. The final electrodepositable compositions, as described, contain the pigment dispersion and an ammonium or amine salt group solubilized cationic electrodepositable epoxy-containing vehicle resin and other ingredients typically used in electrodepositable compositions. Among the kinds of resins used are various polyepoxides such as polyglycidyl ethers of polyphenols, polyglycidyl ethers of polyhydric alcohols and polyepoxides having oxyalkylene groups in the epoxy molecule.

The automobile industry still has needs in the areas of controlled film thickness and lower temperature cure systems. The ability to build thicker, uniform films which are smooth and free of defects will allow the elimination of an intermediate layer of paint known as a primer surface or spray primer, previously required to yield a sufficiently smooth surface for the topcoat. Such an elimination results in removal of one paint cycle and provides more efficient operations. Thicker electrocoat primers may also provide improved corrosion resistance.

The present invention is directed to an advanced epoxy cationic resin composition prepared by forming an advanced epoxy resin having terminal oxirane groups and subsequently converting at least part of the terminal oxirane groups of the advanced epoxy resin to cationic groups by reacting the resin with a nucleophilic compound for forming a cationic site in the molecule and adding an organic acid and water simultaneously with or subsequently to addition of the nucleophile. According to the invention the advanced epoxy cationic resin composition has a charge density of from 0.2 to 0.6 milliequivalent of cationic charge per gram of resin. The advanced epoxy resin is prepared by reacting in the presence of a suitable catalyst

60 to 90 weight percent of glycidyl ethers (A) comprising:

(A-1) at least one diglycidylether of a diol which is a diglycidyl ether of a polyetherdiol, a diglycidyl ether of an aliphatic diol essentially free of ether oxygen atoms or a diglycidyl ether of an oxyalkylated diol, and

(A-2) a diglycidylether of a dihydric phenol,with

40 to 10 weight percent of a dihydric phenol (B),

wherein (A-1) and (A-2) are employed in such quantities that 10 to 75 weight percent of the glycidyl ethers (A) are contributed by component (A-1) and from 25 weight percent to about 90 weight percent of the glycidyl ethers are contributed by component (A-2), and components (A) and (B) are employed in such quantities that the resultant epoxide equivalent weight is from 350 to 10,000.

Optionally, a monofunctional capping agent (C) may be present. The components (A-1) and (A-2) are employed in quantities such that from 10 to 75, preferably from 10 to 50 and most preferably from 15 to 35, weight percent of the diglycidyl ethers contained in component (A) are contributed by component (A-1) and

from 25 to 90, preferably from 50 to 90 and most preferably from 65 to 85, weight percent of such glycidyl ethers are contributed by component (A-2). The components (A) and (B) are employed in such quantities that the resultant advanced epoxy resin has an average epoxide equivalent weight of from 350 to 10,000 and preferably from 600 to 3,000.

The present invention is also directed to a process for preparation of the above advanced epoxy cationic resin from an epoxy resin composition having terminal oxirane groups which process includes the step of converting oxirane groups to cationic groups by reacting a nucleophilic compound with at least some of the oxirane groups of the epoxy resin composition wherein an organic acid and water are added during some part of this conversion, i.e. simultaneously with or subsequently to the addition of the nucleophilic compound.

According to the process of the invention an advanced epoxy resin is used obtained by reacting in the presence of a suitable catalyst

60 to 90 weight percent of glycidyl ethers (A) comprising:

(A-1) at least one diglycidylether of a diol which is a diglycidyl ether of a polyetherdiol, a diglycidyl ether of an aliphatic diol essentially free of ether oxygen atoms or a diglycidyl ether of an oxyalkylated diol, and

(A-2) a diglycidylether of a dihydric phenol,with

40 to 10 weight percent of a dihydric phenol (B)

wherein (A-1) and (A-2) are employed in such quantities that 10 to 75 weight percent of the glycidyl ethers contained in component (A) are contributed by component (A-1) and from 25 weight percent to 90 weight percent of the glycidyl ethers are contributed by component (A-2), and components (A) and (B) are employed in such quantities that the resultant epoxide equivalent weight is from 350 to 10,000; whereby there is obtained a cationic, advanced epoxy resin having a charge density of from 0.2 to 0.6 milliequivalent of charge per gram of resin.

The present invention is also directed to a coating composition comprising an aqueous dispersion of the above-described cationic, advanced epoxy resin, a method for making such compositions and a method for coating such compositions.

The cationic, advanced epoxy resin compositions of the invention contain the resins obtained from a selected advanced epoxy resin having terminal oxirane groups by reacting at least some of the epoxy (oxirane) groups of the resin with a nucleophilic compound and adding an organic acid and water at some point during the preparation.

The starting epoxy resin component for preparing the cationic, advanced epoxy resin compositions is an advanced resin prepared by reacting a composition comprising a glycidyl ether of a diol (A-1), a glycidyl ether of a dihydric phenol (A-2) with a dihydric phenol (B) and optionally, a monohydric capping agent (C). Glycidyl ethers of dihydric phenols useful for the preparation of these resins are those having at least one, and preferably an average of two, vicinal epoxide groups per molecule. These polyepoxides can be produced by condensation of an epihalohydrin with a dihydric phenol in the presence of a basic acting substance.

Useful glycidyl ethers of dihydric phenols are represented by Formulae I and II:

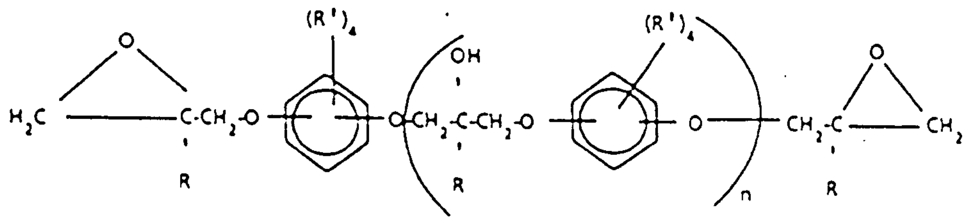

(I)

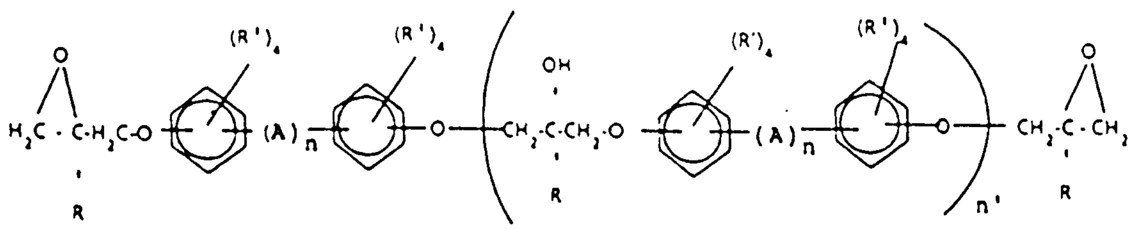

(II)

wherein A is a divalent hydrocarbon group having from 1 to 12, preferably 1 to 6 carbon atoms,

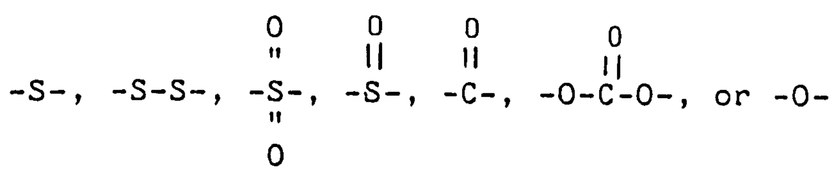

each R' is independently hydrogen, a hydrocarbyl or hydrocarbyloxy group having from 1 to 4 carbon atoms, or a halogen, preferably chlorine or bromine; each R is independently hydrogen or a hydrocarbyl group having from 1 to 3 carbon atoms; n has a value from zero to 1; and n' has a value from zero to 10, preferably from 0.1 to 5.

Dihydric phenols useful for the production of these polyepoxides include 2,2-bis(4-hydroxyphenyl)-propane (bisphenol A), 1,1-bis(4-hydroxyphenyl)ethane, bis(4-hydroxyphenyl)methane (bisphenol F), p,p'-hydroxybiphenyl, resorcinol, hydroquinone, or the like. The particularly preferred polyglycidyl ethers of polyhydric phenols are the diglycidyl ether of bisphenol A and the oligomeric polyglycidyl ethers of bisphenol A.

The diglycidyl ethers of diols useful in the preparation of the cationic, advanced epoxy resins of the present invention are represented by the following structural formula:

(III)

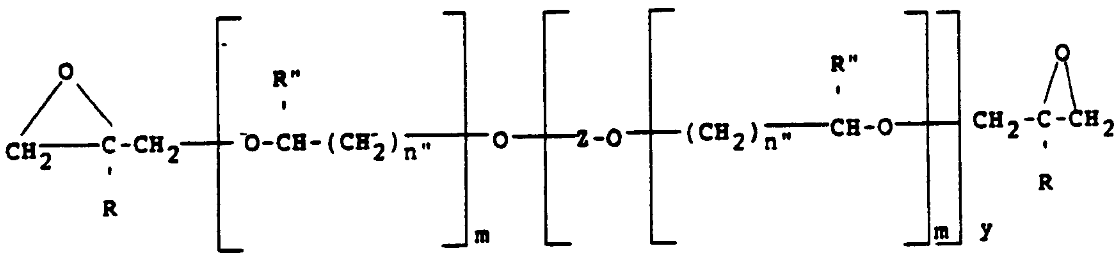

wherein R is as hereinbefore defined; R" is hydrogen or an alkyl group having from 1 to 6, preferably from 1 to 4, carbon atoms; n" has a value of 1 to 3, m is an integer from 0 to 50, preferably from 0 to 20, most preferably from 0 to 10; y is 0 or 1; and Z is a divalent aliphatic or cycloaliphatic group having from 2 to 20, preferably from 2 to 12, carbon atoms or one of the groups represented by the following formulas

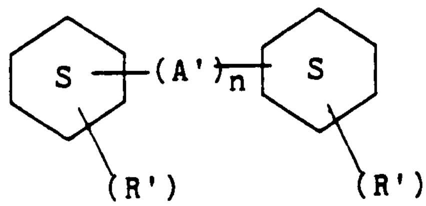

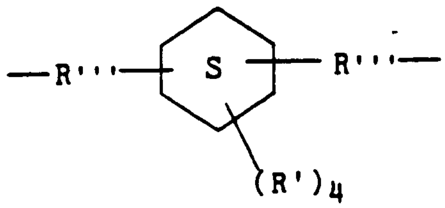

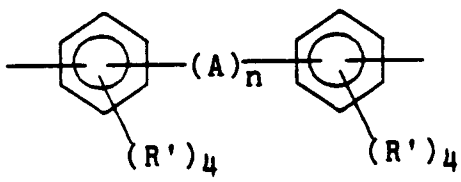

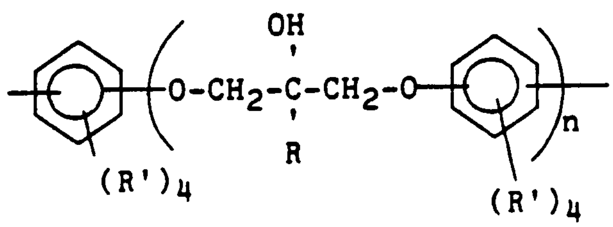

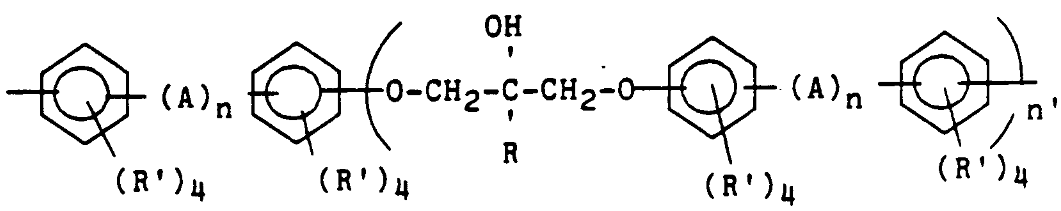

or

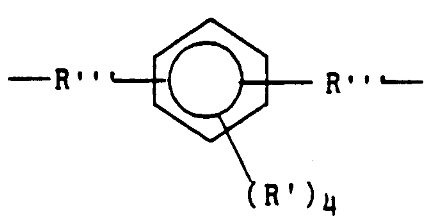

wherein A, R, R', R", n, and n' are defined as hereinbefore and A' and R''' are divalent hydrocarbon groups having from 1 to 6 carbon atoms.

The glycidyl ethers of the diols are produced by the condensation of an epihalohydrin with a diol having the following structure:

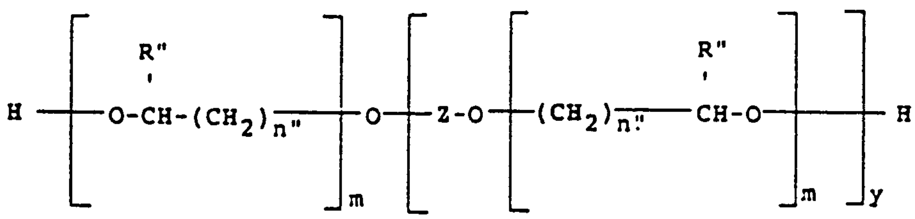

(IV)

wherein R", Z, m, Y and n" are defined as hereinbefore. The resulting halohydrin product is then dehydrohalogenated by known methods with a basic acting substance, such as sodium hydroxide to produce the corresponding diglycidyl ether.

The diglycidyl ethers of diols of Formula III include diglycidyl ethers of polyetherdiols, diglycidyl ethers of aliphatic diols essentially free of ether oxygen atoms and diglycidyl ethers of oxyalkylated diols.

The diglycidyl ethers of polyetherdiols contemplated by Formula III are those having the structure:

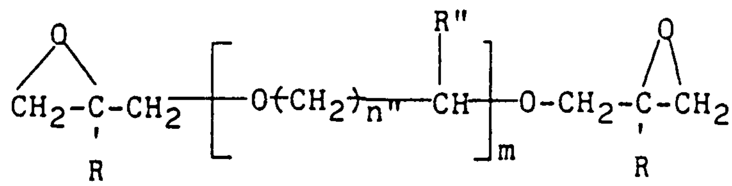

(V)

wherein R is defined as hereinbefore, R" is hydrogen or an alkyl group having from 1 to 6 carbon atoms, n" has a value of 1 to 3 and m is a number having an average from 2 to 50.

The glycidyl ethers of polyetherdiols of Formula V are produced by the condensation of an epihalohydrin with a polyetherdiol having the structure:

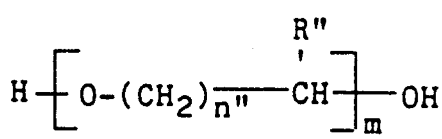

VI

where R", n" and m are defined as hereinbefore.

The polyetherdiols may be produced by the polymerization of the appropriate alkylene oxide or of mixtures of various alkylene oxides to produce a chain having the desired R" groups distributed among the units. Examples of useful polyetherdiols are diethylene glycol, triethylene glycol, poly(ethylene glycol), dipropylene glycol, tripropylene glycol, poly(propylene glycol), di-1,2-butylene glycol, poly(1,2-butyleneoxide), poly(1,4-butanediol), and the like. The particularly preferred polyetherdiols from which the diglycidyl ethers are derived are dipropylene glycol and poly(propylene glycol) in which the average value of m is between 5 and 20.

The diglycidyl ethers of aliphatic diols essentially free of ether oxygen atoms contemplated by Formula III are those having the structure:

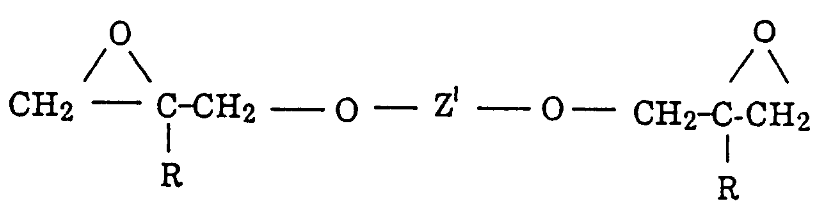

(VII)

wherein each R is independently hydrogen or a hydrocarbyl group having from 1 to 3 carbon atoms; Z' is a divalent aliphatic or cycloaliphatic group essentially free of ether oxygen atoms and having from 2 to 20, preferably from 2 to 12, carbon atoms or one of the groups represented by the formulas

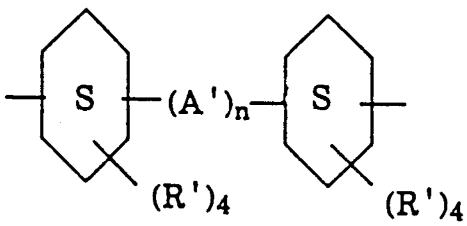

or

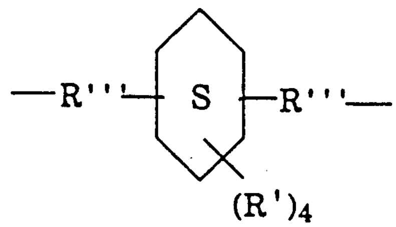

A' is a divalent hydrocarbon group having from 1 to 6 carbon atoms; each R' is independently hydrogen or a hydrocarbyl group having from 1 to 4 carbon atoms; each R''' is an aliphatic group having from 1 to 6, preferably from 1 to 4, carbon atoms; and n is defined as hereinbefore. Examples of useful aliphatic diols which are essentially free of ether oxygen atoms are 1,4-butanediol, 1,6-hexanediol, 1,12-dodecanediol, neopentylglycol, dibromoneopentyl glycol, 1,3-cyclohexanediol, hydrogenated bisphenol A, 1,4-cyclohexanedimethanol, 1,2-cyclohexanediol, 1,4-cyclohexanediol and combinations thereof.

The glycidyl ethers of aliphatic diols which are essentially free of ether oxygen atoms of Formula VII can be produced by the condensation of an epihalohydrin with an aliphatic diol which is essentially free of ether oxygen atoms having the structure:

HO-Z′-OH (VIII)

where Z′ is as defined above. The resultant halohydrin ether product is then dehydrohalogenated by known methods with a basic acting material such as sodium hydroxide.

The diglycidyl ethers of oxyalkylated diols contemplated by Formula III are those compounds having the structural formula:

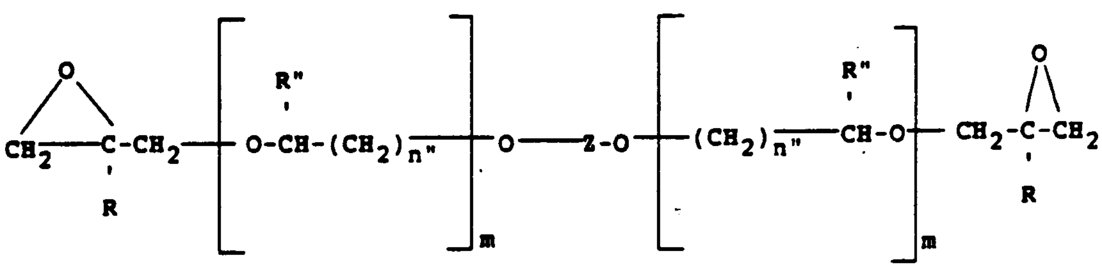

(IX)

wherein R, R″ Z, and n″ are defined as hereinbefore, and m is an integer from 1 to 25, preferably from 1 to 15, most preferably from 1 to 5.

These glycidyl ethers of Formula IX are produced by the condensation of an epihalohydrin with an oxyalkylated diol having the structural formula:

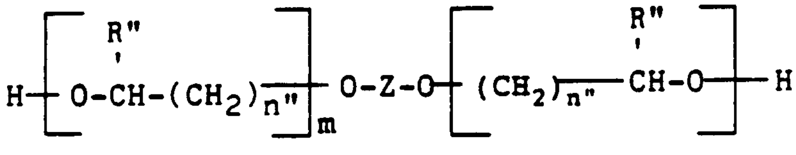

(X)

wherein Z, R″, m and n″ are defined as hereinbefore. The resultant halohydrin product is then dehydrohalogenated by known methods with a basic acting substance, such sodium hydroxide, to produce the

desired diglycidyl ether.

The oxyalkylated diols are produced by reacting a diol of the formula

HO-Z-OH (XI)

wherein Z is defined as hereinbefore, with the appropriate molar ratio of ethylene oxide, propylene oxide, butylene oxide, or mixtures thereof. Examples of useful diols include ethylene glycol, 1,4-butanediol, 1,6-hexanediol, neopentyl diol, 1,12-dodecanediol, 1,3-cyclohexanediol, 1,4-cyclohexanediol, 1,4-cyclohexanedimethanol, hydrogenated bisphenol A, bisphenol A, bisphenol F, hydroquinone, dihydroxydiphenyl oxide, p-xylenol and bisphenol capped epoxy resin.

Some of the common methods of synthesis of the diglycidylethers of polyetherdiols or aliphatic diols which are essentially free of ether oxygen atoms produce significant amounts of organic chloride-containing impurities. However, other processes are known for preparing products with lower levels of such impurities. While the low-chloride resins are not required for the practice of this invention, they may be used, if desired, for possible improvements in the process of preparing the resins, in the storage properties of the resins or formulated coatings made therefrom or in the performance properties of the products.

Mixtures containing the above two glycidyl ether components are reacted with a dihydric phenol and, optionally, a capping agent to produce epoxy-functional resins having the desired epoxide (oxirane) group content which are used to prepare the cationic resins of the invention. The effective proportions of the diglycidyl ether components range from 10 to 75 weight percent of the diglycidylether of a diol (A-1) and from 25 to 90 weight percent of the diglycidyl ether of a dihydric phenol (A-2). However, better overall results are obtained with from 10 to 50 weight percent of the diglycidylether of a diol and from 50 to 90 weight percent of the diglycidylether of a dihydric phenol. Especially preferred is from 15 to 35 weight percent of the diglycidylether of a diol and correspondingly from 65 to 85 weight percent of the diglycidylether of a dihydric phenol. While products containing higher than 90 percent of the diglycidylether of a diol will electrodeposit to give high film build, their rupture voltage limits their use to the lower voltages which do not provide sufficient throwing power for many applications such as in electrocoating automobile bodies. The proportions of the glycidyl ether components (A = A-1 + A-2) and the dihydric phenol (B) are selected to provide an average epoxy equivalent weight in the advanced epoxy resin of from 350 to 10,000, preferably from 600 to 3,000. Such proportions are in the range of from 60 to 90 weight percent of component A and from 10 to 40 weight percent of component B. Useful dihydric phenol compounds include those described above as suitable for production of polyepoxide. The preferred dihydric phenol is bisphenol A. Also useful are the bisphenols produced by chain extension of the diglycidyl ether of a bisphenol with a molar excess of a bisphenol to produce a diphenolic functional oligomeric product.

The use of capping agents such as monofunctional phenolic compounds provides the advantageous ability to reduce the epoxide content of the resulting product without chain-extension reactions and thus allows independent control of the average molecular weight and the epoxide content of the resulting resin within certain limits. Use of a monofunctional compound to terminate a certain portion of the resin chain ends also reduces the average epoxy functionality of the reaction product. The monofunctional phenolic compound is typically used at levels of zero to 0.7 equivalent of phenolic hydroxyl groups per equivalent of epoxy which would remain after reaction of substantially all of the phenolic groups of the diphenol.

Examples of useful monofunctional capping agents are monofunctional phenolic compounds such as phenol, tertiary-butyl phenol, cresol, para-nonyl phenol and higher alkyl substituted phenols. Particularly preferred is para-nonyl phenol. The total number of phenolic groups and the ratio of difunctional to monofunctional phenolic compounds, if any are used, are chosen so that there will be a stoichiometric excess of epoxide groups. Ratios are also chosen so that the resulting product will contain the desired concentration of terminal epoxy groups and the desired concentration of resin chain ends terminated by the monophenolic compound after substantially all of the phenolic groups are consumed by reaction with epoxy groups. Usually, the amount of the capping agent is from 1 percent to 15 percent based on the total weight of the A and B components.

These amounts are dependent on the respective equivalent weights of the reactants and the relative amounts of the epoxy-functional components and may be calculated by methods known in the art. In the practice of this invention, the desired epoxide content of the reaction product useful for preparation of the cationic resin is typically between 1 and 5 percent, calculated as the weight percentage of oxirane groups, and preferably is from 2 to 4 percent. These levels are preferred because they provide, after conversion, the desired cationic charge density in the resinous products useful in cathodic electrodeposition. These cationic resins are produced by conversion of part or all of the epoxy groups to cationic groups as described below.

Reaction of the monofunctional compound with epoxy groups of the polyglycidylether components of the reaction mixture may be done prior to, substantially simultaneously with, or subsequent to the chain-extension reactions of the diphenolic compound and the polyglycidylether components. The preferred method is to have all of the reactants present simultaneously.

Reactions of the above components to produce the epoxy resins are typically conducted by mixing the components and heating, usually in the presence of a suitable catalyst, to temperatures between 130° and 200°C, preferably between 150° and 175°C, until the desired epoxide content of the product is reached. The reaction optionally may be conducted in an appropriate solvent to reduce the viscosity, facilitate mixing and handling, and assist in controlling the heat of reaction.

Many useful catalysts for the desired reactions are known in the art. Examples of suitable catalysts include ethyltriphenylphosphonium acetate•acetic acid complex; ethyltriphenylphosphonium chloride, bromide, iodide, or phosphate; and tetrabutylphosphonium acetate. The catalysts are typically used at levels of 0.01 to 0.5 mole percent of the epoxide groups.

Appropriate solvents include aromatic solvents, glycol ethers, glycol ether esters, high boiling esters or ketones, or mixtures. Other useful solvents will be apparent to those skilled in the art. Preferred solvents are ethylene glycol monobutylether and propylene glycol monophenylether. Solvent content may range from zero to 30 percent of the reaction mixture. A solvent is usually chosen which is compatible with the subsequent cation-forming reactions and with the final coating composition so that the solvent does not require subsequent removal.

Unexpectedly, incorporation of these glycidyl ethers of diols into the epoxy resin confer to cathodically electrodepositable coating compositions produced therefrom the ability to build thicker films having controlled thickness during the electrodeposition process, as compared to a similar composition using an epoxy resin not containing the diol/glycidyl ether component. The ability to deposit thicker films is highly desirable for reducing the number of paint applications required while improving the corrosion resistance and appearance of the electrodeposited coating. The film thickness can be controlled by adjusting the amount of the diglycidylether of diol incorporated into the epoxy resin. Generally, thickness increases with increasing content of this component.

Another advantage is that the cationic epoxy resins containing the diglycidylether of a diol have a lower viscosity at a given temperature than unmodified cationic resins of the same molecular weight. This lower viscosity allows the use of higher molecular weight resins and/or less solvent to achieve a viscosity comparable to an unmodified resin. The lower viscosity resins allow the coating composition greater flowout during deposition and curing which results in better appearance. Alternatively, the lower viscosity resins enable curing at lower temperatures to give equivalent flow and appearance. Finally, coatings produced using these epoxy resins have greater flexibility due to incorporation of the diglycidylether of a diol component as compared to those based on similar resins not containing that component.

The nucleophilic compounds which are used advantageously in forming the cations required by this invention are represented by the following classes of compounds, sometimes called Lewis bases:

(a) monobasic heteroaromatic nitrogen compounds,

(b) tetra (lower alkyl)thioureas,

(c) $R_1$-S-$R_2$ wherein $R_1$ and $R_2$ individually are lower alkyl, hydroxy lower alkyl or are combined as one alkylene radical having 3 to 5 carbon atoms,

(d)

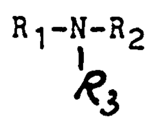

wherein $R_2$ and $R_3$ individually are lower alkyl, hydroxy lower alkyl,

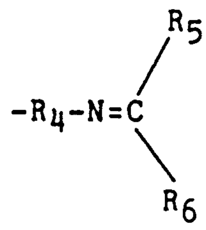

or are combined as one alkylene radical having from 3 to 5 carbon atoms, $R_4$ is an alkylene group having from 2 to 10 carbon atoms, $R_5$ and $R_6$ individually are lower alkyl and $R_1$ is hydrogen or lower alkyl, aralkyl or aryl, except that when $R_2$ and $R_3$ together are an alkylene group then $R_1$ is hydrogen, lower alkyl or hydroxyalkyl and when either or both of $R_2$ and $R_3$ is

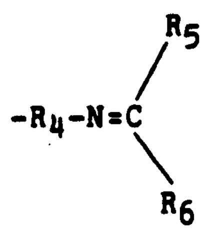

then $R_1$ is hydrogen,
(e)

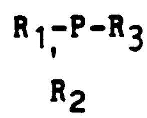

wherein $R_1$, $R_2$ and $R_3$ individually are lower alkyl, hydroxy lower alkyl or aryl.

In this specification the term lower alkyl means an alkyl having from 1 to 6 carbon atoms such as methyl, ethyl, propyl, isopropyl, n-butyl, isobutyl, n-pentyl, isopentyl, n-hexyl and isohexyl or branch chain isomers thereof.

Representative specific nucleophilic compounds are pyridine, nicotinamide, quinoline, isoquinoline, tetramethyl thiourea, tetraethyl thiourea, hydroxyethylmethyl sulfide, hydroxyethylethyl sulfide, dimethyl sulfide, diethyl sulfide, di-n-propyl sulfide, methyl-n-propyl sulfide, methylbutyl sulfide, dibutyl sulfide, dihydroxyethyl sulfide, bis-hydroxybutyl sulfide, trimethylene sulfide, thiacyclohexane, tetrahydrothiophene, dimethyl amine, diethyl amine, dibutyl amine, 2-(methylamino)ethanol, diethanolamine and the ketimine derivatives of polyamines containing secondary and primary amino groups such as those produced by the reaction of diethylene triamine or N-aminoethylpiperazine with acetone, methyl ethyl ketone or methylisobutyl ketone; N-methylpiperidine, N-ethylpyrrolidine, N-hydroxyethylpyrrolidine, trimethylphosphine, triethyl-phosphine, tri-n-butylphosphine, trimethylamine, triethylamine, tri-n-propylamine, tri-isobutylamine, hydroxyethyldimethylamine, butyldimethylamine, trihydroxyethylamine, triphenylphosphorus, and N,N-dimethylphenethylamine.

Substantially any organic acid, especially a carboxylic acid, can be used in the conversion reaction to form onium salts so long as the acid is sufficiently strong to promote the reaction between the nucleophilic compound and the vicinal epoxide group(s) on the resinous reactant. In the case of the salts formed by addition of acid to a secondary amine/epoxy resin reaction product, the acid should be sufficiently strong to protonate the resultant tertiary amine product to the extent desired.

Monobasic acids are normally preferred ($H^{\oplus}A^{\ominus}$). Suitable organic acids include, for example, alkanoic acids having from 1 to 4 carbon atoms (e.g., acetic acid, propionic acid, etc.), alkenoic acids having up to 5 carbon atoms (e.g., acrylic acid, methacrylic acid, etc.) hydroxy-functional carboxylic acids (e.g., glycolic acid, lactic acid, etc.) and organic sulfonic acids (e.g., methanesulfonic acid), and the like. Presently

preferred acids are lower alkanoic acids of 1 to 4 carbon atoms with lactic acid and acetic acid being most preferred. The anion can be exchanged, of course, by conventional anion exchange techniques. See, for example, U.S. Patent 3,959,106 at column 19. Suitable anions are chloride, bromide, bisulfate, bicarbonate, nitrate, dyhydrogen phosphate, lactate and alkanoates of 1-4 carbon atoms. Acetate and lactate are the most preferred anions.

The conversion reaction to form cationic resins is normally conducted by merely blending the reactants together and maintaining the reaction mixture at an elevated temperature until the reaction is complete or substantially complete. The progress of the reaction is easily monitored. The reaction is normally conducted with stirring and is normally conducted under an atmosphere of inert gas (e.g., nitrogen). Satisfactory reaction rates occur at temperatures of from 25 °C to 100 °C, with preferred reaction rates being observed at temperatures from 60 ° to 80 °C.

Good results can be achieved by using substantially stoichiometric amounts of reactants although a slight excess or deficiency of the epoxy-containing resin or the nucleophilic compounds can be used. With weak acids, useful ratios of the reactants range from 0.5 to 1.0 equivalent of nucleophilic compounds per epoxide group of the resin and 0.6 to 1.1 equivalents of organic acid per epoxide. These ratios, when combined with the preferred epoxide content resins described above, provide the desired range of cationic charge density required to produce a stable dispersion of the coating composition in water. With still weaker acids (e.g., a carboxylic acid, such as acetic acid) a slight excess of acid is preferred to maximize the yield of onium salts. In preparing the compositions in which the cationic group being formed is an onium group, the acid should be present during the reaction of the nucleophilic compounds and the epoxy group of the resin. When the nucleophilic compounds is a secondary amine, the amine-epoxy reaction can be conducted first, followed by addition of the organic acid to form the salt and thus produce the cationic form of the resin.

For the onium-forming reactions, the amount of water that is also included in the reaction mixture can be varied to convenience so long as there is sufficient acid and water present to stabilize the cationic salt formed during the course of the reaction. Normally, it has been found preferable to include water in the reaction in amounts of from 5 to 30 moles per epoxy equivalent. When the nucleophilic compound is a secondary amine, the water can be added before, during, or after the resin epoxy group/nucleophile reaction. The preferred range of charge density of the cationic, advanced epoxy resin is from 0.2 to 0.6 milliequivalent of charge per gram of the resin.

It has also been found advantageous to include minor amounts of water-compatible organic solvents in the reaction mixture. The presence of such solvents tends to facilitate contact of the reactants and thereby promote the reaction rate. In this sense, this particular reaction is not unlike many other chemical reactions and the use of such solvent modifiers is conventional. The skilled artisan will, therefore, be aware of which organic solvents can be included. One class of solvents that we have found particularly beneficial are the monoalkyl ethers of the $C_2$-$C_4$ alkylene glycols. This class of compounds includes, for example, the monomethyl ether of ethylene glycol, the monobutyl ether of ethylene glycol, etc. A variety of these alkyl ethers of alkylene glycols are commercially available.

When a desired degree of reaction is reached, any excess nucleophilic compound can be removed by standard methods, e.g., dialysis, vacuum stripping and steam distillation.

The cationic, advanced epoxy resins of this invention in the form of aqueous dispersions are useful as coating compositions, especially when applied by electrodeposition. The coating compositions containing the cationic resins of this invention as the sole resinous component are useful but it is preferred to include crosslinking agents in the coating composition so that the coated films, when cured at elevated temperatures, will be crosslinked and exhibit improved film properties. The most useful sites on the resin for crosslinking reactions are the secondary hydroxyl groups along the resin backbone. Materials suitable for use as crosslinking agents are those known to react with hydroxyl groups and include blocked polyisocyanates; amine-aldehyde resins such as melamine-formaldehyde, urea-formaldehyde, benzoguanine-formaldehyde, and their alkylated analogs; polyester resins; and phenol-aldehyde resins.

Particularly useful and preferred crosslinking agents are the blocked polyisocyanates which, at elevated temperatures, deblock and form isocyanate groups which react with the hydroxyl groups of the resin to crosslink the coating. Such crosslinkers are typically prepared by reaction of the polyisocyanate with a monofunctional active-hydrogen compound.

Examples of polyisocyanates suitable for preparation of the crosslinking agent are described in U.S. Patent 3,959,106 to Bosso, et al., in Column 15, lines 1-24. Also suitable are isocyanate-functional prepolymers derived from polyisocyanates and polyols using excess isocyanate groups. Examples of suitable prepolymers are described by Bosso, et al., in U.S. Patent 3,959,106, Column 15, lines 25-57. In the preparation of the prepolymers, reactant functionality, equivalent ratios, and methods of contacting the

reactants must be chosen in accordance with considerations known in the art to provide ungelled products having the desired functionality and equivalent weight.

Preferred polyisocyanates are the isocyanurate trimer of hexamethylene diisocyanate, toluene diisocyanate, methylene diphenylene diisocyanate, isophorone diisocyanate and prepolymers of toluene diisocyanate and trimethylolpropane, dipropylene glycol, tripropylene glycol, or mixtures thereof.

Suitable blocking agents include alcohols, phenols, oximes, lactams, and N,N-dialkylamides or esters of alpha-hydroxyl group containing carboxylic acids. Examples of suitable blocking agents are described in U.S. Patent 3,959,106 to Bosso, et al., in Column 15, line 58, through Column 16, line 6, and in U.S. Patent 4,452,930 to Moriarity. Particularly useful are the oximes of ketones, also known as ketoximes, due to their tendency to deblock at relatively lower temperatures and provide a coating composition which can be cured at significantly lower temperatures. The particularly preferred ketoxime is methyl ethyl ketoxime.

The cationic resins of the invention, when formulated with certain preferred ketoxime-blocked polyisocyanates, provide coating compositions which cure at significantly lower temperatures than those of the prior art.

The blocked polyisocyanates are prepared by reacting equivalent amounts of the isocyanate and the blocking agent in an inert atmosphere such as nitrogen at temperatures between 25° to 100°C, preferably below 70°C to control the exothermic reaction. Sufficient blocking agent is used so that the product contains no residual, free isocyanate groups. A solvent compatible with the reactants, product, and the coating composition may be used such as a ketone or an ester. A catalyst may also be employed such as dibutyl tin dilaurate.

The blocked polyisocyanate crosslinking agents are incorporated into the coating composition at levels coresponding to from 0.2 to 2.0 blocked isocyanate groups per hydroxyl group of the cationic resin. The preferred level is from 0.5 to 1.0 blocked isocyanate group per resin hydroxyl group.

A catalyst optionally may be included in the coating composition to provide faster or more complete curing of the coating. Suitable catalysts for the various classes of crosslinking agents are known to those skilled in the art. For the coating compositions using the blocked polyisocyanates as crosslinking agents, suitable catalysts include dibutyl tin dilaurate, dubutyl tin diacetate, dibutyl tin oxide, stannous octanoate, and other urethane-forming catalysts known in the art. The preferred catalyst is dibutyl tin dilaurate. Amounts used typically range between 0.1 and 3 weight percent of binder solids.

Unpigmented coating compositions are prepared by blending the cationic resinous product with the crosslinking agent and optionally any additives such as catalysts, solvents, surfactants, flow modifiers, defoamers, or other additives. This mixture is then dispersed in water by any of the known methods. A particularly preferred method is the technique known as phase-inversion emulsification, wherein water is slowly added with agitation to the above mixture, usually at temperatures ranging from ambient to 70°C, until the phases invert to form an organic phase-in-water dispersion. The solids content of the aqueous dispersion is usually between 5 and 30 percent by weight and preferably between 10 and 25 percent by weight for application by electrodeposition.

Pigmented coating compositions are prepared by adding a concentrated dispersion of pigments and extenders to the unpigmented coating compositions. This pigment dispersion is prepared by grinding the pigments together with a suitable pigment grinding vehicle in a suitable mill as known in the art.

Pigments and extenders known in the art are suitable for use in these coatings including pigments which increase the corrosion resistance of the coatings. Examples of useful pigments or extenders include titanium dioxide, talc, clay, lead oxide, lead silicates, lead chromates, carbon black, strontium chromate, and barium sulfate.

Pigment grinding vehicles are known in the art. A preferred pigment grinding vehicle for use in this invention consists of a water-soluble cationic resinous product, water, and a minor amount of glycol ether solvent. The cationic resinous product is prepared by reacting an epichlorohydrin/bisphenol A condensation product having an epoxide group content of 8 percent with a nucleophilic compound, an acid, and water in a similar fashion as described above for the cationic resins used in the preferred embodiment of the invention. The water-soluble product may be diluted with water to form a clear solution useful as a pigment grinding vehicle.

The pH and/or conductivity of the coating compositions may be adjusted to desired levels by the addition of compatible acids, bases, and/or electrolytes known in the art. Other additives such as solvents, surfactants, defoamers, anti-oxidants, bactericides, may also be added to modify or optimize properties of the compositions or the coating in accordance with practices known to those skilled in the art.

Although the coating compositions of the invention may be applied by any conventional technique for aqueous coatings, they are particularly useful for application by cathodic electrodeposition, wherein the article to be coated is immersed in the coating composition and made the cathode, with a suitable anode in

contact with the coating composition. When sufficient voltage is applied, a film of the coating deposits on the cathode and adheres. Voltage may range from 10 to 1,000 volts, typically 50 to 500. The film thickness achieved generally increases with increasing voltage. In the case of the coating compositions of the invention, thicker films are achieved by incorporation of the diglycidyl ether of a diol into the epoxy resin used to produce the cationic resins of the invention. Also, control over the final thickness may be exercised by adjusting the amount of that component used. Current is allowed to flow for between a few seconds to several minutes, typically two minutes over which time the current usually decreases. Any electrically conductive substrate may be coated in this fashion, especially metals such as steel and aluminum. Other aspects of the electrodeposition process, such as bath maintainence, are conventional. After deposition, the article is removed from the bath and typically rinsed with water to remove that coating composition which does not adhere.

The uncured coating film on the article is cured by heating at elevated temperatures, ranging from 200° to 400°F (93°C to 204°C), for periods of 1 to 60 minutes. For the embodiments of the invention using the ketoxime-blocked polyisocyanate curing agents, satisfactory cure of the resulting coating can be achieved at cure schedules as low as 250°F (121°C) for 30 minutes, as compared to 325° to 350°F (163° to 177°C) for 20 to 30 minutes for systems typically used in the art. Although the ketoxime-blocked polyisocyanates have been cited in the prior art as being capable of curing cathodically electrodepositable compositions at relatively lower temperatures, no examples of reduction to practice have been found which achieved cure at less than 325°F (163°C). Thus, this aspect of the invention represents a significant and unexpected improvement over the prior art.

All of the coating compositions of the invention provide useful cathodically electrodepositable coatings having improved flowout, film build, and flexibility properties due to the incorporation of the diglycidyl ether of a diol component.

In the following examples, epoxy resins were used as starting materials which are characterized as follows:

T-12 catalyst is dibutyl tin dilaurate, originally available from M & T Chemicals, now available from Air Products.

Epoxy Resin A is a condensation product of bisphenol A and epichlorohydrin having an epoxide equivalent weight of 187.

Epoxy Resin B is a condensation product of dipropylene glycol and epichlorohydrin having an epoxide equivalent weight of 185.

Epoxy Resin C is a condensation product of a polypropylene glycol having an average molecular weight of 375 to 425 and epichlorohydrin, the product having an epoxide equivalent weight of 323.

Epoxy Resin D is a condensation product of epichlorohydrin and a polypropylene glycol having an average molecular weight of 375 to 425. The product has an epoxide equivalent weight of 333 and contains less than 0.3 percent chlorine in the form of organic chloride impurities and inorganic chlorides.

Epoxy Resin E is the diglycidyl ether of 1,4-butanediol having an epoxide equivalent weight (EEW) of 125 available from Wilmington Chemical Corp. as Heloxy™ WC-67.

Epoxy Resin F is the diglycidyl ether of cyclohexanedimethanol having an EEW of 163 available from Wilmington Chemical Corp. as Heloxy™ MK-107.

Epoxy Resin G is the diglycidyl ether of neopentyl glycol having an EEW of 135 available from Wilmington Chemical Corporation as Heloxy™ WC-68.

Curing Agent A is a blocked polyisocyanate available from Mobay Chemical Company as Desmodur® KL5-2540. The material is believed to be the reaction product of methyl ethyl ketoxime and a polyisocyanate which is substantially the isocyanurate trimer of hexamethylene diisocyanate. The product is supplied as a 75 percent solution of the blocked polyisocyanate in propylene glycol monomethylether acetate.

Curing Agent B is prepared by charging into a one-liter, round-bottomed flask fitted with a nitrogen inlet, thermometer, mechanical stirrer, condenser, and an addition funnel 262.3 parts by weight of toluene diisocyanate (80/20 mixture of 2,4/2,6 isomers) under a nitrogen atmosphere. The diisocyanate was stirred and heated to 60°C. A mixture of 160.2 parts of Polyglycol P425 (The Dow Chemical Company) and 0.35 parts of T-12 catalyst was added over a period of one hour at a rate which maintained the reaction mixture near 60°C. The mixture was maintained at 60°C for an additional 40 minutes after completion of the addition, then 196.8 parts of methyl ethyl ketoxime was added over a period of 100 minutes at 60°C. After one-third of the ketoxime had been added, addition of 135.2 parts of propylene glycol monomethyl ether acetate (2-methoxy propyl acetate) was begun and proceeded concurrently with the ketoxime addition. After completion of these two simultaneous additions, infrared analysis showed no detectable unreacted isocyanate. The product was diluted by addition of 19.5 parts of 2-ethyl hexanol.

Curing Agent C is prepared by charging into a one-liter, round-bottomed flask fitted with a nitrogen inlet, thermometer, condenser, mechanical stirrer, and an addition funnel 626.3 parts by weight (pbw) of Spencer Kellog's Spenkel™ P49-A6-60, a 60 percent solution of an isocyanate terminated prepolymer from toluene diisocyanate and trimethylolpropane dissolved in methoxypropyl acetate. The solution was stirred at ambient temperatures (22° to 24°C) and 0.62 parts by weight of T-12 (dibutyl tin dilaurate) catalyst was added. Two hundred parts by weight of 2-ethylhexanol was added dropwise over a period of 2 hours. The temperature of the reaction mixture was allowed to rise to 50° to 60°C during the addition. The reaction mixture was then cooled to ambient temperature over 2 hours. The infrared spectrum of the product showed no residual unreacted isocyanate groups. The product solution was approximately 68.9 percent non-volatile.

Pigment grinding vehicle A was prepared by charging into a two-liter, round-bottomed flask fitted with a nitrogen inlet, thermometer, mechanical stirrer and condenser 340.3 parts by weight of Epoxy Resin A and 109.7 parts of bisphenol A. The mixture was stirred under a nitrogen atmosphere and heated to 90°C to form a clear mixture. A solution containing 70 percent by weight of ethyl triphenyl phosphonium acetate in methanol (0.6 parts) was added. The mixture was then heated to 150°C at a rate of 1° to 2°C per minute and then allowed to exotherm to 170°C. The temperature was raised to 175°C and maintained for 30 minutes, at which time the epoxide content of the resin was 8.1 percent by weight. The resin was cooled to 130°C, diluted with 50.0 parts of ethylene glycol monobutyl ether, and cooled to 75°C to give an epoxy resin solution. A mixture of 77.5 parts of nicotinamide, 72.4 parts of lactic acid, and 212.5 parts of water was added to the resin solution over 65 minutes at 73° to 79°C. The mixture was then reacted 3 hours at 76° to 79°C. The resulting clear, light yellow, cationic resin solution was diluted to approximately 40 percent non-volatiles with 673.1 parts of water to produce a clear, yellow solution useful as a pigment grinding vehicle.

Pigment Grinding Vehicle B was prepared in the same kind of reactor by first preparing an epoxy resin solution from the same components in the same ratios by the same procedure as described for Pigment Grinding Vehicle A. Then the solution (750 parts) was heated to 82°C and a mixture of 85.7 parts of N,N-dimethyl-2-aminoethanol, 154.6 parts of a solution containing 75 percent of lactic acid and 288.9 parts of deionized water was added thereto over a period of 55 minutes at 75° to 82°C. The reaction mixture was maintained at 80°C for an additional 4.3 hours, then was cooled to 70°C and maintained at that temperature for 11 hours. The product was diluted with water to produce a cationic resin (Pigment Grinding Vehicle B) as a solution having a non-volatile content of 30 percent.

Pigment Grinding Vehicle C was prepared by making the epoxy resin solution in the same manner and same proportions. The epoxy resin solution (422 parts) was heated to 65°C. Then 47.1 parts of 2-(methylamino)ethanol was added dropwise over 22 minutes with cooling to maintain the temperature at 65° to 74°C. The temperature then was maintained at 80°C for 3 hours. A solution (75.4 parts) which contained 75 percent of lactic acid was diluted with water (100 parts) and then the resulting solution was added at 75° to 80°C to the reaction mixture at 75° to 80°C. Thereafter dilution of the product with additional water (458.7 parts) provided a cationic resin solution containing 40 percent non-volatiles (Pigment Grinding Vehicle C).

A concentrated pigment dispersion (Pigment Dispersion A) was prepared by placing a pigment blend (100 parts by weight) comprised of 35 parts of clay, 35 parts of titanium dioxide, 20 parts of lead silicate, and 10 parts of carbon black in a metal paint can along with 50 parts of Pigment Grinding Vehicle A. Enough chrome-plated steel pellets (about 2 mm diameter by 5 mm long) were added to comprise about one-third of the final bulk volume. The pigments were ground and dispersed in the vehicle by placing the can on a paint shaker for 45 minutes. Water was then added and blended in to reduce the viscosity slightly and the grinding pellets removed by filtration. The final pigment dispersion contained 57 percent pigment by weight.

Concentrated Pigment Dispersion B was prepared by the same procedure using lead silicate, carbon black, lead chromate, titanium dioxide, and clay. The dispersion was further diluted with water to a final pigment content of 55.7 percent by weight.

Pigment Dispersion C was prepared using Pigment Grinding Vehicle B in the procedure described for Pigment Dispersion A. The dispersion was diluted further with water to a final pigment content of 56.3 percent by weight.

Pigment Dispersion D was prepared using Pigment Grinding Vehicle C in the procedure described for Pigment Dispersion A. The resulting dispersion was diluted further with water to a final pigment content of 54 percent by weight.

Crosslinker D:

Toluene diisocyanate (1363.1 g) was charged to a 5 liter, round-bottomed flask equipped with a condenser, mechanical stirrer, nitrogen inlet, addition funnel and thermometer. The material was heated to 58°C and a mixture of 308.9 g of polypropylene glycol of average molecular weight of 425 and 1.29 g T-12 catalyst was added dropwise with cooling to maintain 58°C. An additional 523.5 g of the polypropylene glycol was added afterward. The total time for the two feeds was 140 minutes. 2-Ethylhexanol (1527.6 g) was then added over a period of 220 minutes at 58-63°C. The reaction mixture was then heated at 73°C for 45 minutes and the resulting blocked isocyanate crosslinker was a clear, viscous liquid at room temperature.

Pigment vehicle D:

Into a 5 liter, round-bottomed flask equipped with condenser, addition funnel, nitrogen inlet, mechanical sirrer, and thermometer was charged 920.5 g D.E.R. 361 (a commercially available epoxy resin having an epoxide equivalent weight of 188) and 298.1 g bisphenol A. The mixture was heated under nitrogen to 85°C and 1.44 g of a 70% solution of ethyl triphenylphosphonium acetate-acetic acid complex in methanol was added. The mixture was heated to 150°C and allowed to exotherm to 184°C. The temperature was brought down to 175°C and the reaction was maintained at 175°C for one hour. The resin was cooled to 83°C and diluted with 304.6 g methyl ethyl ketone. The solution was cooled to 65°C and 167.5 g 2-(methylamino)-ethanol was added over 19 minutes at 64-70°C. The reaction was heated to 80-84°C for 65 minutes. The solution was then cooled to 75°C and 276.8 g of 72.5% lactic acid solution in water was added. The mixture was then diluted with water to an approximately 40% non-volatile content to produce a clear, viscous solution.

Pigment Dispersion E:

Into a one gallon, metal paint can was placed 698.0 g of pigment vehicle D, 108.3 g ASP 200 clay, 41.9 g EP202 lead silicate, 14.7 g Raven 410 carbon black, and 537.0 g R-900 titanium dioxide. A volume of about one-half of the bulk pigment volume of chrome-plated steel diagonals was added and the pigments were ground and dispersed by shaking the sealed paint can on a paint shaker. Water was added as the grinding progressed until a total of 186.0 g of water had been added. The diagonals were removed by passing the dispersion through a screen. The pigment dispersion contained 44.2% pigments by weight.

COATING AND TESTING THE COMPOSITIONS

The coating compositions were placed in a stainless steel tank, agitated, and maintained at 80°F (27°C). Unpolished steel test panels having Bonderite™ 40 treatment and P60 rinse Advanced Coating Technologies, Inc. were immersed in the tank and connected as the cathode to a D.C. voltage source, with the tank walls serving as the anode. The desired voltage was applied for two minutes, then the panels were removed, rinsed with deionized water, and baked at the specified temperature for 30 minutes. Coatings from Examples 11-30 and 32-38, and Comparative Examples B and C were cured at 275°F (135°C).

Examples 1-6

Preparation of Cationic, Advanced Epoxy Resins

Into a two liter, round-bottom flask fitted with a nitrogen inlet, thermometer, mechanical stirrer, and condenser were charged Epoxy Resin A and Epoxy Resin B or Epoxy Resin C, and bisphenol A in the proportions shown in Table I. The mixture was stirred under a nitrogen atmosphere and heated to 85° to 90°C to form a clear mixture. A solution containing 70 percent by weight of ethyl triphenyl phosphonium acetate acetic acid complex in methanol in the amount shown in Table I was added at 90°C. The mixture was then heated to 150°C at a rate of 1° to 2°C per minute and then allowed to exotherm. The peak exotherm temperature was controlled to below 190°C by cooling. The temperature was then allowed to fall to 175°C and then maintained at 175°C until 70 minutes past peak exotherm, when the desired epoxide content was reached. The epoxide equivalent weight of each product is shown in Table I.

For each of Resins R and S, para-nonylphenol, in the amount shown in Table I, was included in the material charged to the round-bottomed flask. Comparative material A was prepared in the same manner as

Resins N-Q from the components shown in Table I.

TABLE I

| Parts by Weight | Advanced Epoxy Resin | | | | | | |
|---|---|---|---|---|---|---|---|
| | N | O | P | Q | R | S | Comparative Material A* |
| Epoxy Resin A | 536.6 | 297.7 | 257.9 | 300.7 | 615.5 | 370.3 | 596.2 |
| Epoxy Resin B | 59.7 | 99.2 | 138.9 | 300.7 | 205.6 | -- | -- |
| Epoxy Resin C | -- | -- | -- | -- | -- | 123.4 | -- |
| Bisphenol A | 304.2 | 203.2 | 203.2 | 308.5 | 346.9 | 179.9 | 303.8 |
| p-Nonylphenol | -- | -- | -- | -- | 132.0 | 76.4 | -- |
| Ethyltriphenyl-phosphonium acetate"acetic acid complex solution (70 percent in methanol) | 1.57 | 1.05 | 1.05 | 1.58 | 2.17 | 1.16 | 1.57 |
| Epoxide equivalent weight of product (g/equivalent) | 1850 | 1,780 | 1,710 | 1,840 | 1,630 | 1,680 | 1,810 |

The resin products summarized in Table I were converted to a cationic resin in the following manner.

Into a two-liter, round-bottomed flask fitted with a nitrogen inlet, thermometer, mechanical stirrer, condenser, and addition funnel was charged some of each of the epoxy resin product shown in Table I and

a glycol ether in the kinds and amounts shown in Table II. The mixture was heated under nitrogen to between 110° to 130°C and stirred to form a solution. The solution was cooled to the reaction temperature and an aqueous mixture of nicotinamide, lactic acid, and water was added over a period of 30 minutes to produce an opaque, whitish, viscous mixture. The reaction temperature was maintained throughout the addition. Thirty minutes after completion of this addition, additional water was added over 30 minutes. The reaction mixture was maintained at the reaction temperature for a reaction time of 3 hours after completion of the first addition. The products were clear, light yellow, highly viscous solutions. Comparative Example A was prepared in this same manner from comparative Material A in the amounts and kinds of ingredients shown in Table II.

TABLE II

| | Cationic, Advanced Epoxy Resins Example No. | | | | | | Comparative Example A* |
|---|---|---|---|---|---|---|---|
| | 1 | 2 | 3 | 4 | 5 | 6 | |
| Epoxy Resin Used: | N | O | P | Q | R | S | Comparative Material A |
| **Parts by Weight:** | | | | | | | |
| Designated Advanced Epoxy Resin | 344.7 | 600.0 | 600.0 | 358.7 | 650.0 | 744.3 | 313.1 |
| Ethylene glycol monobutyl ether | 60.9 | 66.7 | 48.6 | 18.9 | -- | 82.7 | 78.3 |
| Propylene glycol monophenyl ether | -- | -- | -- | -- | 72.2 | -- | -- |
| Nicotinamide | 17.1 | 30.2 | 30.4 | 17.9 | 35.4 | 40.5 | 15.9 |
| Lactic acid | 16.0 | 28.2 | 28.4 | 16.7 | 33.1 | 37.8 | 14.8 |
| Water | 43.1 | 148.5 | 76.6 | 46.1 | 89.3 | 103.7 | 33.3 |
| Additional water | 41.0 | -- | 72.8 | 42.8 | 84.8 | 95.7 | 44.6 |
| Reaction Temperature (°C) | 80 | 70 | 70 | 80 | 70 | 70 | 80 |
| Reaction Time (hours) | 3 | 7 | 6 | 4.25 | 6 | 5.5 | 5.25 |

*Not an example of the present invention

Example 7

Into a 5-liter, round-bottom flask fitted with a nitrogen inlet, thermometer, mechanical stirrer and condenser was charged 1,763.7 parts by weight of Epoxy Resin A, 588.4 parts of Epoxy Resin C, 852.7

parts of bisphenol A, and 363.4 parts of 95 percent para-nonyl phenol. The mixture was stirred under nitrogen atmosphere and heated to 90 °C to form a clear mixture. A solution containing 70 percent by weight of ethyl triphenyl phosphonium acetate•acetic acid complex in methanol (4.6 parts) was added at 90 °C. The mixture was heated to 150 °C over a period of 29 minutes and allowed to exotherm to 184 °C. The temperature was then maintained at 175 °C for 95 minutes past exotherm. The mixture was cooled to 130 °C and an additional 2.3 parts of the phosphonium acetate solution was added. The temperature was raised to 175 °C over 30 minutes and maintained at 175 °C for 50 minutes. The epoxy resin product was then cooled and the solid pulverized. The epoxide equivalent weight of the product (Epoxy Resin T) was 1,660 g/equivalent.

Seven hundred fifty parts of Epoxy Resin T and 83.3 parts of propylene glycol monophenyl ether were charged to a similar reactor and heated under nitrogen to 110 °C to form an epoxy resin solution. The solution was cooled to 85 °C and a mixture of 40.2 parts of N,N-dimethylethanolamine, 54.2 parts of 75 percent lactic acid, and 101.6 parts of deionized water was added dropwise over 35 minutes at 80 ° to 85 °C. The reaction mixture was maintained at 80 °C for 7.25 hours. The cationic resin product was a viscous, light yellow solution.

Example 8

A portion (750 parts) of Epoxy Resin T and 83.3 parts of propyleneglycol monophenyl ether were charged to a reactor as described in Example 7 and heated under nitrogen to 82 °C. 2-(methylamino)ethanol (33.9 parts) was added dropwise with cooling over 40 minutes. The temperature was allowed to climb to 95 °C during the course of the addition. The reaction mixture was then maintained at 100 °C for 3.5 hours to produce a viscous, yellow resin in solution. Portions of this resin were converted to cationic form during preparation of unpigmented coating compositions therefrom in Examples 18, 23 and 24.

Example 9

A solution (826.3 parts) was prepared by heating under nitrogen to 90 °C Epoxy Resin T and propyleneglycol monophenyl ether in the same proportions in a similar reactor as described in Examples 7 and 8. Methyl isobutyl ketone (61.5 parts) was added dropwise at 80 °C. The resulting resin solution was then heated to 150 °C at ambient pressure and 37.6 parts of a solvent-water azeotrope was collected in a Dean-Stark trap. The solution was cooled to 75 °C. Versamine® K11 (115.6 parts), which is a ketimine derivative of a polyamine containing both primary and secondary amine groups was added dropwise over a period of 65 minutes at 70 ° to 79 °C. The reaction mixture was then maintained at 80 ° to 84 °C for one hour to produce a viscous, yellow resin solution. Portions of this resin were converted to cationic form during preparation of coating compositions therefrom in Examples 19, 25 and 26.

Example 10

Into a 1-liter, round-bottomed flask fitted with a nitrogen inlet, thermometer, condenser, mechanical stirrer, and addition funnel was charged 108.8 parts of Epoxy Resin A, 36.3 parts Epoxy Resin D, 52.5 parts bisphenol A, and 22.4 parts 95 percent paranonyl phenol. The mixture was heated under nitrogen to 95 °C and 0.28 part of a 70 percent solution in methanol of ethyl triphenyl phosphonium acetate•acetic acid complex was added. The mixture was heated to 150 °C over a period of 30 minutes and then allowed to exotherm to 170 °C. The temperature was then maintained at 175 °C for 70 minutes after peak exotherm. The epoxide equivalent weight of the product at this point was 1,690 g/-equivalent. The product was cooled to 115 °C and diluted with 24.4 parts of propylene glycol monophenyl ether to produce Epoxy Resin U in solution.

The epoxy resin solution was cooled to 90 °C and a mixture of 11.9 parts of nicotinamide, 14.9 parts 75 percent lactic acid, and 29.4 parts of deionized water was added dropwise over a period of 39 minutes at between 72 ° to 85 °C. The reaction mixture then was maintained at 70 °C for 7.5 hours to produce a cationic resin solution.

Preparation of Unpigmented Coating Compositions

Examples 11-26

Into a two liter, round-bottomed flask fitted with a nitrogen inlet, thermocouple temperature indicator, mechanical stirrer, condenser, and an addition funnel was charged the resin solution as shown in Table III. This solution was heated under nitrogen atmosphere to 60° to 75°C and stirred while the curing agent and T-12catalyst were added and blended with the resin. For Examples 18, 19 and 23-26, lactic acid was added to convert the resin to the cationic form. The mixture was cooled to 60° to 63°C and dropwise addition of deionized water was begun. The water was added at a rate which permitted thorough mixing with the viscous mixture to form a water-in-resin dispersion in which no separated water layer was apparent. The temperature of the mixture was steadily decreased as the addition proceeded such that the temperature was 40° to 50°C when the mixture inverted, as noted by a drop in viscosity, to form a resin in water dispersion. The dispersion was then cooled to ambient temperature while diluting with the remainder of the water. The amounts of the ingredients are shown in Table III.

For Examples 11-14, the pH was adjusted to about 7.6 with a 10 weight percent solution of N,N-diethyl-2-aminoethanol in water. The conductivity was adjusted to about 1,500 microohm/cm with a 10 weight percent solution of ammonium acetate in water. Comparative Example B was prepared in the same manner as Examples 11-14.

TABLE III
Unpigmented Coating Compositions

| Example No. | Resin Example No. | Resin Weight Parts | Curing Agent Kind | Curing Agent Weight Parts | Catalyst T-12 Parts | Lactic Acid[a] | Water |
|---|---|---|---|---|---|---|---|
| 11 | 1 | 229.5 | A | 142.1 | 4.0 | -- | 1127.0 |
| 12 | 2 | 217.0 | A | 146.5 | 4.0 | -- | 1133.0 |
| 13 | 3 | 212.8 | A | 145.9 | 4.0 | -- | 1137.2 |
| 14 | 4 | 205.8 | A | 141.3 | 4.0 | -- | 1151.0 |
| 15 | 5 | 289.9 | B | 135.0 | 4.9 | -- | 1397.4 |
| 16 | 6 | 288.8 | B | 135.0 | 4.8 | -- | 1398.1 |
| 17 | 7 | 264.5 | A | 145.1 | 4.9 | -- | 1422.3 |
| 18 | 8 | 240.0 | A | 138.8 | 4.9 | 14.9 | 1486.7 |
| Comp. B* | Comp. A* | 194.5 | A | 118.2 | 3.3 | -- | 1185.0 |
| 19 | 9 | 268.8 | A | 146.4 | 4.9 | 43.4 | 1564.5 |
| 20 | 10 | 300.9 | A | 155.3 | 5.2 | -- | 1467.0 |
| 21 | 7 | 278.0 | B | 142.5 | 5.2 | -- | 1474.4 |
| 22 | 7 | 276.0 | C | 164.2 | 5.1 | -- | 1440.7 |
| 23 | 8 | 245.2 | B | 150.6 | 5.1 | 15.3 | 1598.1 |
| 24 | 8 | 227.2 | C | 149.0 | 4.6 | 14.0 | 1400.7 |
| 25 | 9 | 283.5 | A | 154.2 | 5.2 | 12.8 | 1546.4 |
| 26 | 9 | 239.0 | B | 121.8 | 4.4 | 15.2 | 1331.8 |

[a] Parts of a solution containing 75 percent by weight of lactic acid.

*Not examples of the present invention.

Water was added to the products of Examples 11-26 to adjust the non-volatile content to approximately 18 percent by weight which were then used as unpigmented coating compositions.

Preparation of Pigmented Coating Compositions

Examples 27-38 and Comparative Example C

Pigmented coating compositions of Examples 27-38 and Comparative Example C were prepared by adding, with stirring, the concentrated pigment dispersion as shown in Table IV and described before to the unpigmented coating compositions of the examples as shown in Table IV. Sufficient pigment dispersion was added to yield a pigment-to-binder ratio of 0.2 by weight in the final paint. The pigment dispersions were made by using a pre-prepared pigment grinding vehicle.

TABLE IV

| Example No | Coating Composition Used Example No. | Pigment Dispersion |
|---|---|---|
| 27 | 11 | B |
| 28 | 16 | A |
| 29 | 17 | C |
| 30 | 21 | D |
| 31 | 22 | C |
| 32 | 18 | D |
| 33 | 23 | D |
| 34 | 24 | D |
| 35 | 19 | D |
| 36 | 25 | D |
| 37 | 26 | D |
| 38 | 20 | A |
| Comparative C* | Comparative B* | B |

*Not examples of the present Invention

Coating and Testing

Panels were electrocoated as described above and baked at 275 °F (135 °C) for 30 minutes, except as noted. Film thickness at various voltages are shown in Table V for unpigmented and pigmented compositions.

In all cases, the resins of the invention provided thicker films than the comparative examples which did not contain a diglycidylether of a polyetherdiol. The thickness also generally increased with increasing proportions of that component.

## TABLE V

### ELECTRODEPOSITION FILM THICKNESS

| Coating Composition Example No. | Film Thickness - μm (Mils) Voltage - volts 100 | 150 | 175 | 200 | 250 | 275 | 300 | 325 | 350 |
|---|---|---|---|---|---|---|---|---|---|
| 11 | -- | -- | -- | 10.2 (0.4) | 12.7 (0.5) | -- | 14.0 (0.55) | -- | -- |
| 12 | -- | -- | -- | 20.3 (0.8) | 27.9 (1.1) | -- | 35.6 (1.4) | -- | -- |
| 13 | -- | -- | -- | 27.9 (1.1) | 27.9 (1.1) | 35.6 (1.4) | 35.6 (1.4) | -- | 38.1 (1.5) |
| 14 | -- | -- | -- | 17.8 (0.7) | 27.9 (1.1) | 33.0 (1.3) | 35.6 (1.4) | 38.1 (1.5) | -- |
| 15 | -- | -- | -- | 22.9 (0.9) | 35.6 (1.4) | -- | -- | -- | -- |
| 16 | -- | -- | -- | 25.4 (1.0) | 33.0 (1.3) | 43.2 (1.7) | -- | -- | -- |
| 17 | -- | 40.6 (1.6) | -- | 55.9 (2.2) | -- | -- | -- | -- | -- |
| 18 | 38.1 (1.5) | 63.5 (2.5) | -- | -- | -- | -- | -- | -- | -- |
| 23 | 11.7 0.46 | -- | -- | 20.3 (0.8) | -- | -- | -- | -- | -- |
| 24 | -- | 13.0 (0.51) | -- | 21.4 (0.84) | 38.6 (1.52) | -- | -- | -- | -- |
| 26 | -- | 32.3 (1.27) | -- | 39.9 (1.57) | 52.6 (2.07) | -- | -- | -- | -- |
| 27 | -- | -- | -- | -- | -- | -- | 15.2 (0.6) | -- | -- |
| 28 | -- | -- | -- | 17.8 (0.7) | 19.0 (0.75) | -- | -- | -- | -- |
| 29 | 20.3 (0.8) | 24.4 (0.96) | 29.0 (1.14) | 34.0 (1.34) | 47.2 (1.86) | -- | -- | -- | -- |
| 30 | 15.2 (0.6) | 24.4 (0.96) | 29.0 (1.14) | 40.6 (1.6) | -- | -- | -- | -- | -- |
| 31[a] | -- | -- | -- | -- | -- | 11.4 (0.45) | -- | 13.2 (0.52) | 14.7 (0.58) |

TABLE V. (Cont.)

| Coating Composition Example No. | Film Thickness - µm (Mils) Voltage - volts 100 | 150 | 175 | 200 | 250 | 275 | 300 | 325 | 350 |
|---|---|---|---|---|---|---|---|---|---|
| 32 | 14.2 (0.56) | 25.4 (1.0) | -- | 30.5 (1.2) | -- | -- | -- | -- | -- |
| 33 | 9.4 (0.37) | 13.7 (0.54) | 15.2 (0.60) | 18.5 (0.73) | 23.6 (0.93) | -- | -- | -- | -- |
| 34 | -- | -- | -- | 15.7 (0.62) | 22.0 (0.87) | 24.4 (0.96) | 26.2 (1.03) | -- | -- |
| 35 | 16.0 (0.63) | 20.3 (0.8) | -- | -- | -- | -- | -- | -- | -- |
| 36[(b)] | 40.6 (1.6) | -- | -- | -- | -- | -- | -- | -- | -- |
| 37 | -- | 30.5 (1.2) | -- | 41.9 (1.65) | 53.3 (2.1) | -- | -- | -- | -- |
| 38 | -- | -- | -- | 24.4 (0.96) | 33.0 (1.3) | -- | 39.1 (1.54) | -- | -- |
| Comparative B* | -- | -- | -- | 8.9 (0.35) | -- | -- | 10.2 (0.4) | 10.2 (0.4) | -- |
| Comparative C* | -- | -- | -- | 8.9 (0.35) | 8.9 (0.35) | -- | 10.2 (0.4) | -- | -- |

[(a)] Cured at 350°F (177°C)

[(b)] Also tested at 50 and 75 volts; thicknesses were 21.0 and 25.1 µm, (0.83 and 0.99 mil), respectively.

*Not examples of the present invention

## Example 39

A cationic electrodeposition resin was prepared by charging into a suitable reactor 27 grams of Epoxy Resin E, 81 grams of Epoxy Resin A, 20 grams of nonyl phenol, and 72 grams of bisphenol A. The mixture

was heated to 80 °C and 0.15 gram of a 70 percent by weight solution of ethyltriphenyl phosphonium acetate•acetic acid complex in methanol was added. This blend was stirred while heating at 1.5 °C/min. to 150 °C whereupon it exothermed to 165 °C where the temperature was held for about one hour. The EEW of the resulting resin was 2028 grams/equivalent.

After cooling this resin to 120 °C, 22 grams of propylene glycol phenyl ether solvent was added. The resin solution was cooled to 60 °C and 7.5 grams of 2-(methylamino)ethanol was added whereupon it exothermed to 67 °C and the temperature was controlled at 60 °C for one hour.

To the reaction product at 60 °C, were added 2.06 grams of dibutyl tin dilaurate catalyst and 137.6 grams of Curing Agent A.

While agitating continuously, a cationic dispersion was prepared by adding to the resulting mixture, at 60 °C, 9.82 grams of an aqueous solution containing 75 percent by weight of lactic acid which was followed by the slow addition of 1401 grams of deionized water. This product is referred to as Resin Dispersion 1.

Resin Dispersion 1 was blended with 148 grams of Pigment Dispersion D to yield a cathodic electrodeposition paint having a pigment to binder ratio of 0.2 to 1. Steel panels pretreated with zinc phosphate were cathodically electrodeposited at various voltages for 2 minutes at a bath temperature of 82 °F (27 °C). The wet films were baked at 275 °F (135 °C) for 30 minutes. Film thicknesses are given in Table VI.

Example 40

A cationic electrodeposition resin was prepared by charging into a suitable reactor 27.5 grams of Epoxy Resin F, 82.5 grams of Epoxy Resin A, 20 grams of nonyl phenol, and 70 grams of bisphenol A. The mixture was heated to 80 °C and 0.11 gram of ethyltriphenyl phosphonium acetate•acetic acid complex catalyst blended with 0.04 gram of methanol was added. This blend was stirred while heating at 1.5 °C/min. to 150 °C whereupon it exothermed to 165 °C where the temperature was held for about one hour. The EEW of the resulting resin is 1641 grams/equivalent.

After cooling this resin to 120 °C, 22 grams of propylene glycol phenyl ether solvent was added. The resin solution was cooled to 60 °C and 9 grams of 2-(methylamino)ethanol was added whereupon it exothermed to 67 °C and the temperature was controlled at 60 °C for one hour.

To the reaction product at 60 °C, were added 2.09 grams of dibutyl tin dilaurate catalyst and 139 grams of Curing Agent A.

While agitating continuously, a cationic dispersion was prepared by adding to the resulting mixture, at 60 °C, 12.3 grams of an aqueous solution containing 75 percent by weight of lactic acid which was followed by the slow addition of 1427 grams of deionized water. This product is referred to as Resin Dispersion 2.

Resin Dispersion 2 was blended with 112 grams of Pigment Dispersion D to yield a cathodic electrodeposition paint having a pigment to binder ratio of 0.2 to 1. Steel panels pretreated with zinc phosphate were cathodically electrodeposited at various voltages for 2 minutes at a bath temperature of 82 °F (27 °C). The wet films were baked at 275 °F (135 °C) for 30 minutes. Film thicknesses are given in Table VI.

Example 41

A cationic electrodeposition resin was prepared by charging into a suitable reactor 27 grams of Epoxy Resin G, 81 grams of Epoxy Resin A, 20 grams of nonyl phenol, and 72 grams of bisphenol A. The mixture was heated to 80 °C and 0.11 gram of ethyltriphenyl phosphonium acetate•acetic acid complex catalyst blended with 0.04 gram of methanol was added. This blend was stirred while heating at 1.5 °C/min. to 150 °C whereupon it exothermed to 165 °C where the temperature was held for about one hour. The EEW of the resulting resin is 2337 grams/equivalent.

After cooling this resin to 120 °C, 22 grams of propylene glycol phenyl ether solvent was added. The resin solution was cooled to 60 °C and 6.42 grams of 2-(methylamino)ethanol was added whereupon it exotherms to 67 °C and the temperature was controlled at 60 °C for one hour.

To the reaction product at 60 °C, were added 2.06 grams of dibutyl tin dilaurate catalyst and 138 grams of Curing Agent A.

While agitating continuously, a cationic dispersion was prepared by adding to the resulting mixture, at 60 °C, 8.75 grams of an aqueous solution containing 75 percent by weight of lactic acid which was followed by the slow addition of 1397 grams of deionized water. This product is referred to as Resin Dispersion 3.

Resin Dispersion 3 was blended with 111 grams of Pigment Dispersion D to yield a cathodic electrodeposition paint having a pigment to binder ratio of 0.2 to 1. Steel panels pretreated with zinc phosphate were cathodically electrodeposited at various voltages for 2 minutes at a bath temperature of

82 °F (27 °C). The wet films were baked at 275 °F (135 °C) for 30 minutes. Film thicknesses are given in Table VI.

Example 42

A cationic electrodeposition resin was prepared by charging into a suitable reactor 247.5 grams of Epoxy Resin G, 371.2 grams of Epoxy Resin A, and 381.3 grams of bisphenol A. The mixture was heated to 80 °C and 1.9 grams of a 70% solution of ethyltriphenylphosphonium acetate•acetic acid complex was added. This blend was stirred while heating at 1.5 °C/minute to 150 °C whereupon it exothermed to 165 °C where the temperature was held for about one hour. The epoxy equivalent weight of the resulting resin is 1861.

To 175 grams of this advanced epoxy resin was added 19.4 grams of propylene glycol phenyl ether solvent at 120 °C. This resin solution was cooled to 70 °C and a solution of 8.37 grams of dimethylethanolamine, 8.05 grams of an aqueous solution of 72.5% lactic acid, and 42.3 grams of water was added dropwise. The reaction mixture exothermed to 80 °C and the temperature was controlled at 80 °C for six hours.

To the reaction product at 80 °C is added 2.64 grams of dibutyl tin dilaurate catalyst and 189 grams of Curing Agent C.

While agitating continuously, a cationic dipersion was prepared by adding dropwise to the resulting mixture, at 70 °C, 1702 grams of deionized water. This is Resin Dispersion 4.

Resin Dispersion 4 was blended with sufficient Pigment Dispersion D to yield a cathodic electrodeposition paint having a pigment to binder ratio of 0.2 to 1. Steel panels pretreated with zinc phosphate were cathodically electrocoated at various voltages for two minutes at a bath temperature of 80 °F (27 °C). The wet films were baked at 350 °F (177 °C) for 30 minutes. The resultant film thicknesses are shown in Table VI.

In electrodeposition coatings, higher voltages typically result in higher film thicknesses. The data in Table VI shows that even at higher voltages, the coatings of the prior art do not achieve the coating thickness obtained by the present invention at lower voltages.

TABLE VI

| RESIN DISPERSION | FILM THICKNESS IN MILS/MM AT INDICATED VOLTAGE | | FILM THICKNESS IN MILS/MM AT INDICATED VOLTAGE | | FILM THICKNESS IN MILS/MM AT INDICATED VOLTAGE | | FILM THICKNESS IN MILS/MM AT INDICATED VOLTAGE | | FILM THICKNESS IN MILS/MM AT INDICATED VOLTAGE |
|---|---|---|---|---|---|---|---|---|---|
| | 50V | 75V | 100V | 125V | 175V | 200V | 225V | 250V | 300V |
| 1 | --- | 0.73/ 0.019 | 0.91/ 0.023 | 1.0/ 0.025 | --- | --- | --- | --- | --- |
| 2 | --- | 0.47/ 0.012 | 0.68/ 0.017 | 0.83/ 0.021 | --- | --- | --- | --- | --- |
| 3 | 0.55/ 0.014 | 0.72/ 0.018 | 0.82/ 0.021 | --- | --- | --- | --- | --- | --- |
| 4 | --- | --- | --- | --- | 0.62/ 0.016 | 0.79/ 0.020 | 1.0/ 0.025 | 1.2/ 0.030 | --- |
| Comparative Example C* | --- | --- | --- | --- | --- | 0.35/ 0.009 | --- | 0.35/ 0.009 | 0.4/ 0.010 |

*Not an Example of the Present Invention

Comparative Example D

To a 2 liter, round-bottomed flask equipped with a mechanical stirrer, condenser, nitrogen inlet, and a thermometer was charged 665.1 grams of D.E.R. 331 (a liquid epoxy resin having an epoxide equivalent weight of 187 available from The Dow Chemical Company), and 335.2 grams bisphenol A. The mixture was heated under a nitrogen atmosphere to 97°C and 1.66 grams of a 70 percent solution of ethyltriphenylphosphonium acetate•acetic acid complex in methanol was added. The mixture was heated to 135 °C and allowed to exotherm to 194 °C. The temperature was allowed to fall to 175 °C and maintained at that temperature for one hour. The product was isolated by cooling and flaking. The solid epoxy resin had an epoxide equivalent weight of 1650.

A portion (230.3 grams) of this solid epoxy resin was heated and dissolved in 57.6 grams of propylene glycol methyl ether in a similar reactor. At 86 °C, 10.5 grams of 2-(methylamino)ethanol was added over a period of ten minutes. The reaction mixture was then held at 90 to 100 °C for 90 minutes. The product was cooled to 80 °C and 105.6 grams of crosslinker D was added and mixed. T-12 catalyst (5.3 grams) and 17.1 grams of 73.4 percent lactic acid were added sequentially. Water was then added dropwise over a period of two hours at 81 to 79 °C until the mixture inverted to form a milky, aqueous dispersion. The dispersion was cooled and further diluted with water to form an approximately 71 percent non-volatile product.

This aqueous dispersion (1,959.5 g) was pigmented by adding 172.5 g of pigment dispersion E with stirring. Cold rolled steel test panels were electrocoated at 80 °F (27 °C) for two minutes as the cathode at various voltages in the resulting bath. The coatings were cured at 177 °C for thirty minutes. The resulting film thickness were as follows:

| Deposition Voltage | Thickness (microns) |
|---|---|
| 200 | 1.8 μm |
| 225 | 1.5 " |
| 250 | 1.4 " |
| 275 | 1.2 " |
| 300 | 1.1 " |

The resulting coatings were very rough and had numerous pinholes, characteristic of poor coalescense upon electrodeposition. The decrease of film thickness with increasing deposition voltage is also consistent with poor coalescense. The coatings withstood fifty double rubs with an methyl isobutyl ketone, MIBK, soaked rag without significant marring. The coating demonstrated zero to 0.4 mm (1/64 inch) corrosion creep from the scribe (total of both sides) after 383 hours under salt spray testing according to ASTM B-177.

Comparative Example E

The solid epoxy resin of Comparative Example D was used to prepare another aqueous dispersion in a similar fashion, except that ethylene glycol hexyl ether was used in addition to propylene glycol methyl ether. The weights of each component were as follows:

| Component | Weight in grams |
|---|---|
| Solid epoxy resin | 230.3 |
| Ethylene glycol hexyl ether | 32.9 |
| Propylene glycol methyl ether | 24.7 |
| 2-(methylamino)ethanol | 10.5 |
| Lactic acid (73.4% solution) | 17.1 |
| Crosslinker D | 101.3 |
| T-12 catalyst | 5.3 |
| Water | 1577.8 |

The aqueous dispersion (1,958.1 g) was pigmented with 178.3 g of pigment dispersion E to prepare a coating bath. Panels were electrocoated as above and cured at 177 °C for 30 minutes. The resulting coatings had the following film thickness:

| Deposition Voltage | Film Thickness µm (mil) |
|---|---|
| 200 | 4.8 (0.19) |
| 225 | 4.6 (0.18) |
| 250 | 4.8 (0.19) |
| 275 | 5.6 (0.22) |
| 300 | 6.3 (0.25) |

The coatings had a slight orange peel texture, but were free of pinholes, and the current cutoff during deposition and the film thickness were indicative of adequate coalescense upon deposition. The coatings passed 20 MIBK double rubs without marring but showed some dulling at 50 double rubs. The coating demonstrated 0.4 to 0.8 mm (1/64 to 2/64 inch) corrosion creep from the scribe (total of both sides) after 383 hours of salt spray testing under ASTM B-117.

Example 43

Into a 2 liter, round bottomed flask fitted, with nitrogen inlet, mechanical stirrer, condenser, and thermometer was charged 88.9 g of D.E.R. 383 (a liquid epoxy resin having an epoxide equivalent weight of 280 available from The Dow Chemical Company), 66.3 g of a product which is substantially the diglycidyl ether of an adduct of four moles ethylene oxide and one mole of bisphenol A (prepared by treating the adduct of bisphenol and ethylene oxide with epichlorohydrin and having an epoxide equivalent weight of 328), and 336.6 g bisphenol A. The mixture was heated to 70 °C and 1.41 g of a 47 percent solution of ethyl triphenylphosphonium phosphate in methanol was added. The mixture was heated to 180 °C for three hours. The resin was cooled to 120 °C and 509.0 g D.E.R. 383 was added. The mixture was heated to 180 °C and held at that temperature for two hours. The epoxide equivalent weight was 1600. The resin was cooled and diluted with propylene glycol methyl ether to 80 percent non-volatile content by weight.

This resin solution (263.6 g) was heated under nitrogen to 85 °C and 8.07 g of 2-(methylamino)ethanol was added. The reaction mixture was maintained at 82 to 85 °C for one hour. Crosslinker D (94.7 g), T-12 catalyst (4.8 g), and 72.9 percent lactic acid solution (10.7 g) mixed with 11.7 g water were added sequentially and mixed. Water was added dropwise over a period of 3 hours at temperatures between 82 and 60 °C until the mixture inverted to form an aqueous dispersion. The dispersion was then cooled and further diluted with water to a non-volatile content of 18 percent.

The aqueous dispersion (1,803.9 g) was pigmented with 172.0 g of pigment dispersion E. Panels were electrocoated and cured as described in comparative Examples D and E. The resulting film thicknesses at each voltage were as follows:

| Deposition Voltage | Film Thickness µm (mil) |
|---|---|
| 200 | 4.0 (0.16) |
| 225 | 4.8 (0.19) |
| 250 | 5.3 (0.21) |
| 275 | 5.8 (0.23) |
| 300 | 6.9 (0.27) |
| 350 | 8.6 (0.34) |

The coatings were smoother than either comparative Examples D or E and were free of pinholes. Rapid current cutoff was also indicative of improved coalescense relative to comparative Example E. These results were evident even in the absence of a coalescing solvent, such as the ethylene glycol hexyl ether used in comparative Example F. The coatings withstood 100 MIBK double rubs without significant marring. The coating showed essentially no corrosion creep from the scribe after 341 hours of salt spray testing according to ASTM B-117.

Example 44

Ethylene glycol hexyl ether (27.7 g) was added to 1,834 g of the coating bath of Example 43 and the bath was stirred for 24 hours. Additional panels were then electrocoated to provide a direct comparison to Comparative Example E to show the effect of the modified resin on film thickness. A comparison of

Example 43 and Comparative Example D is unsatisfactory for this purpose due to the artificially high film thickness in comparative Example D resulting from poor coalescense and poor current cutoff due to the high particle viscosity in the unmodified resin system.

The resulting coatings had the following film thicknesses:

| Deposition Voltage | Thickness µm (mil) |
|---|---|
| 200 | 7.6 (0.30) |
| 225 | 9.9 (0.39) |
| 250 | 12.2 (0.48) |
| 275 | 14.2 (0.56) |
| 290 | 58.4 (2.3) |

The film thickness at a given voltage is higher for this example than for comparative Example E, which has the same solvent content. This demonstrates the increase in thickness due to the resin modification. The coatings were smoother than either comparative Example D or E and were free of pinholes. The panel coating at 290 volts began to rupture and the coating process was stopped, which accounts for the excessive film thickness observed. Rupture is a process where at a specific voltage for the given system, electrodeposition becomes uncontrolled and excessive gassing and deposition take place, due to a lack of current cutoff as the deposit builds. Rupture can occur at progressively lower voltages when the level of solvent becomes too high or the particle viscosity is too low. In this case, this level of solvent was sufficient to bring the rupture voltage for this system down to 290 volts.

The coatings withstood 200 MIBK double rubs without significant marring. Corrosion creep from the scribe after 343 hours of salt spray testing was 0.4 to 0.8 mm (1/64 to 2/64 inch) (total of both sides of scribe).

Example 45

Into a two liter, round-bottomed flask was charged 92.1 g D.E.R 331, 49.8 g of a product which is substantially the diglycidyl ether of an adduct of one mole bisphenol A and six moles ethylene oxide (epoxide equivalent weight of 345, prepared by treating the commercially available adduct with epichlorohydrin in the presence of Lewis acid catalyst, followed by treatment with sodium hydroxide), and 58.8 g bisphenol A. The mixture was heated under nitrogen to 93°C and 0.44 g of a 70 percent solution of ethyl triphenylphosphonium acetate•acetic acid complex in methanol was added. The mixture was heated to 175°C and held for 47 minutes, at which time the epoxide equivalent weight was 1780. The product was cooled and diluted with 28.7 g of ethylene glycol hexyl ether and 21.5 g propylene glycol methyl ether and further cooled to 81°C. 2-(methylamino)ethanol (8.4 g) was added and the temperature was maintained between 87 and 75°C for one hour. Crosslinker D (89.7 g), T-12 catalyst (4.6 g), and 13.8 g of a 73.4 percent solution of lactic acid mixed with 14.0 g of water were added sequentially and mixed at 75°C. Water was then added dropwise at 70 to 75°C until the mixture inverted to form a milky, aqueous dispersion. The dispersion was cooled and further diluted with water to form an approximately 18% non-volatile product.

The aqueous dispersion (1,721.5 g) was pigmented by blending with 158.8 g of Pigment dispersion E and panels were electrocoated and cured as above. The resulting coatings had the following film thickness:

| Deposition Voltage (Volts) | Film Thickness µm (mil) |
|---|---|
| 175 | 11.9 (0.47) |
| 200 | 14.0 (0.55) |
| 225 | 16.5 (0.65) |
| 250 | 18.0 (0.71) |

The coatings were much smoother than comparative Examples D and E, with only a slight orange peel texture. The coatings withstood 200 MIBK double rubs without significant marring. Corrosion creep was 0 to 0.4 mm (1/64 inch) (total of both sides), after 330 hours of salt spray exposure.

EXAMPLE 46

Into a similar reactor to the ones used in Example 45 was charged 154.7 g D.E.R. 331, 51.6 g of a product which is substantially the diglycidyl ether of an adduct of one mole bisphenol A and about two moles propylene oxide (prepared in the same fashion as the diglycidyl ether of the bisphenol/ethylene oxide adduct used in example 45 and having an epoxide equivalent weight of 300), and 93.8 g of bisphenol A. The mixture was heated under nitrogen to 90 °C and 0.7 g of a 70% solution of ethyl triphenylphosphonium acetate-acetic acid complex in methanol was added. The mixture was heated to 175 °C over a period of 25 minutes and maintained at 175 °C for 75 minutes, at which time the epoxide equivalent weight was 1790. The reaction product was cooled and diluted with 42.9 g of ethylene glycol hexyl ether and 32.2 g of propylene glycol methyl ether. The solution was further cooled to 83 °C and 12.5 g of 2-(methylamino)-ethanol was added over ten minutes. The temperature rose to 87 °C and was then maintained at 85-87 °C for 100 minutes. Crosslinker D (137.1 g), T-12 catalyst (6.8 g), and 20.4 g of a 73.4% solution of lactic acid mixed with 20.4 g of water were added sequentially with mixing at 70 to 85 °C. Water was added dropwise over a period of 130 minutes at 70 to 77 °C until the mixture inverted to an aqueous dispersion. The dispersion was cooled and diluted with water to 18% non-volatile content.

The aqueous dispersion (2,509.5 g) was pigmented with 221.5 g of pigment dispersion E and panels were electrocoated and cured as described. The coatings has the following film thicknesses:

| Deposition voltage (volts) | Film Thickness µm (mil) |
|---|---|
| 200 | 5.1 (0.20) |
| 225 | 5.8 (0.23) |
| 250 | 7.4 (0.29) |
| 275 | 8.6 (0.34) |
| 300 | 10.4 (0.41) |
| 350 | 13.0 (0.51) |
| 400 | 17.0 (0.67) |

The coatings were smoother and more glossy than comparative Examples D and E. The coating withstood 100 MIBK double rubs without marring, but showed marring after 200. Corrosion creep from the scribe was 0 to 0.4 mm (zero to 1/64 inch) (total) after 330 hours of salt spray exposure.

## Claims

1. An advanced epoxy cationic resin composition prepared by forming an advanced epoxy resin having terminal oxirane groups and subsequently converting at least part of the terminal oxirane groups of the advanced epoxy resin to cationic groups by reacting the resin with a nucleophilic compound for forming a cationic site in the molecule and adding an organic acid and water simultaneously with or subsequently to addition of the nucleophile characterized in that the advanced epoxy cationic resin composition has a charge density of from 0.2 to 0.6 milliequivalent of cationic charge per gram of resin and in that the advanced epoxy resin is prepared by reacting in the presence of a suitable catalyst
   60 to 90 weight percent of glycidyl ethers (A) comprising:
   (A-1) at least one diglycidylether of a diol which is a diglycidyl ether of a polyetherdiol, a diglycidyl ether of an aliphatic diol essentially free of ether oxygen atoms or a diglycidyl ether of an oxyalkylated diol, and
   (A-2) a diglycidylether of a dihydric phenol,with
   40 to 10 weight percent of a dihydric phenol (B),
   wherein (A-1) and (A-2) are employed in such quantities that 10 to 75 weight percent of the glycidyl ethers (A) are contributed by component (A-1) and from 25 weight percent to about 90 weight percent of the glycidyl ethers are contributed by component (A-2), and components (A) and (B) are employed in such quantities that the resultant epoxide equivalent weight is from 350 to 10,000.

2. The advanced epoxy cationic resin of Claim 1 wherein the diglycidyl ether of a diol has the structural formula

(III)

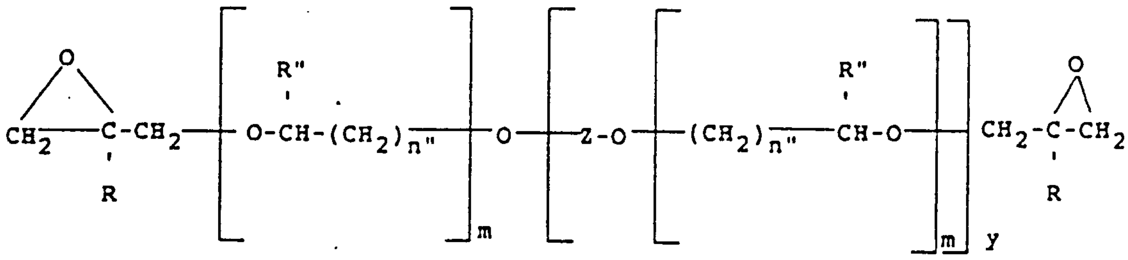

wherein each R is independently hydrogen or a hydrocarbyl group having from 1 to 3 carbon atoms; each R" is hydrogen or an alkyl group having from 1 to 6 carbon atoms, m is an integer from 0 to 50; n" has a value of 1 to 3; y is 0 or 1; and Z is a divalent aliphatic or cycloaliphatic group having from 2 to 20 carbon atoms or one of the groups represented by the formulas

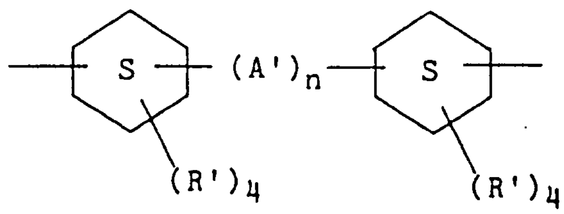

,

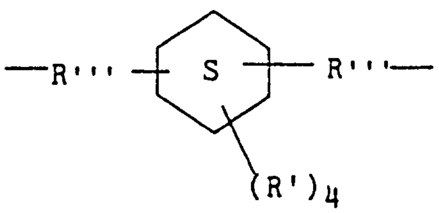

,

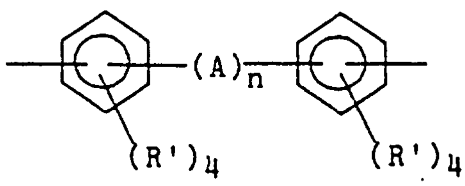

,

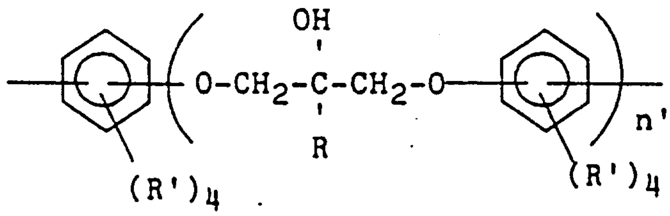

,

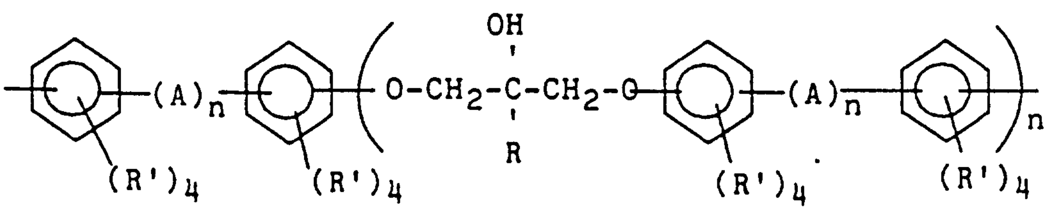

,

or

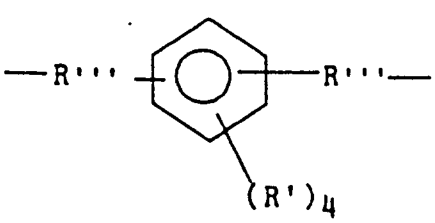

wherein R and R" are defined as hereinbefore; A' and R''' are divalent hydrocarbon groups having from 1 to about 6 carbon atoms; A is a divalent hydrocarbon group having from 1 to 12 carbon atoms,

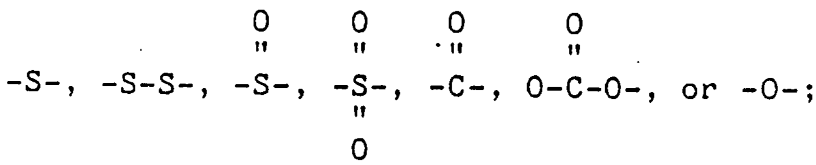

each R' is independently hydrogen, a hydrocarbyl or hydrocarbyloxy group having from 1 to 4 carbon atoms, or a halogen; n has a value from 0 to 1; and n' has a value from 0 to 10.

**3.** The advanced epoxy cationic resin of Claim 2 wherein the diglycidyl ether of the diol is the diglycidyl ether of a polyetherdiol having the structural formula

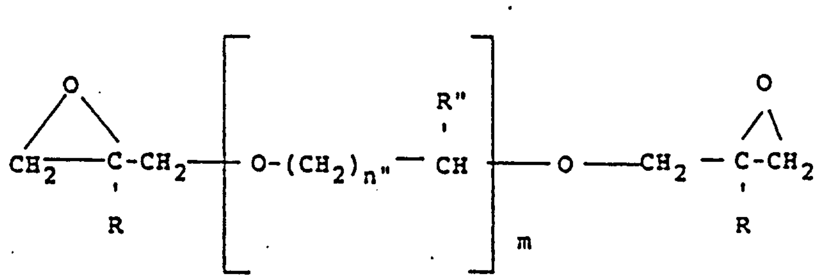

V

wherein m is an integer from 2 to 50 and R, R" and n" are as defined in Claim 2.

**4.** The advanced epoxy cationic resin of Claim 2 wherein the diglycidyl ether of the diol is the diglycidyl ether of an aliphatic diol essentially free of ether oxygen atoms having the structural formula

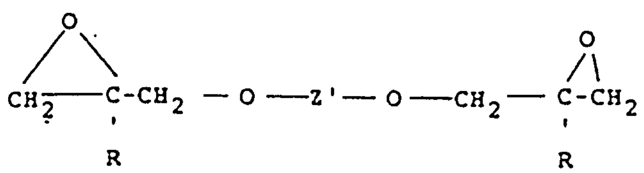

VII

wherein Z' is a divalent aliphatic or cycloaliphatic group having from 2 to 20 carbon atoms or one of the groups represented by the structural formulas

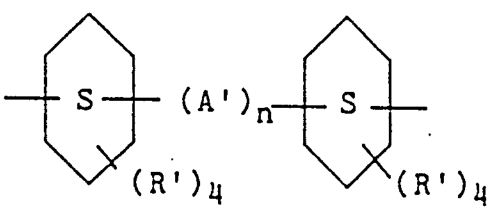

or

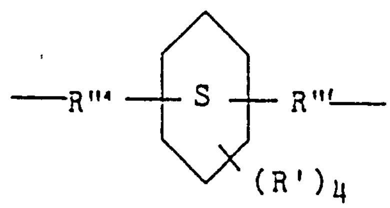

each R' is independently hydrogen or a hydrocarbyl group having from 1 to 4 carbon atoms; and each R, R''', A' and n are as defined in Claim 2.

**5.** The advanced epoxy cationic resin of Claim 2 wherein the diglycidyl ether of the diol is the diglycidyl ether of an oxyalkylated diol having the structural formula

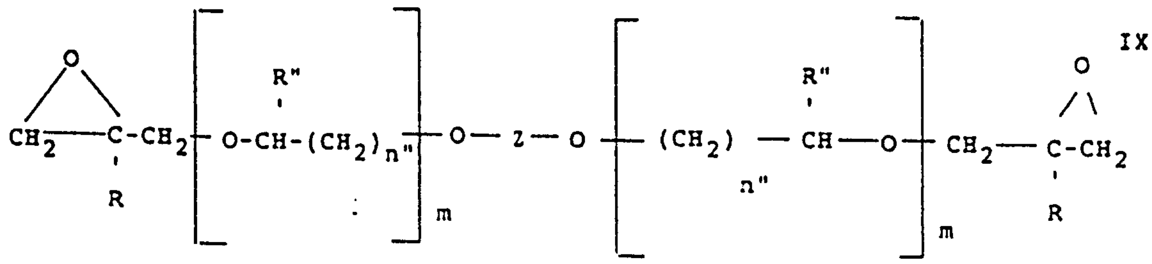

IX

wherein m is an integer from 1 to 25, and R, R', R", R"', A, A', Z, n, n' and n" are as defined in Claim 2.

6. The advanced epoxy cationic resin of any one of Claims 1 to 5 wherein a monofunctional capping agent, component (C) is reacted with components (A) and (B).

7. The advanced epoxy cationic resin of Claim 6 wherein said monofunctional capping agent is a monofunctional phenol.

8. The advanced epoxy cationic resin of any one of Claims 1 to 5 wherein the diglycidylether of a dihydric phenol has the structural formula

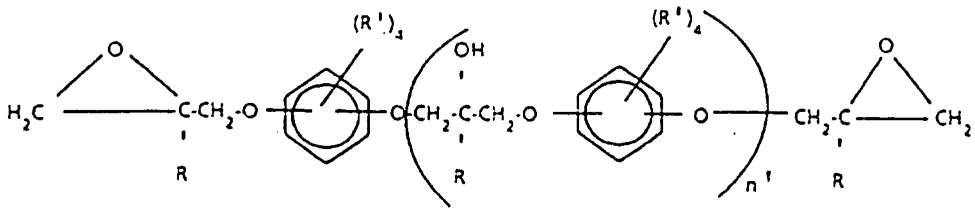

(I)

or

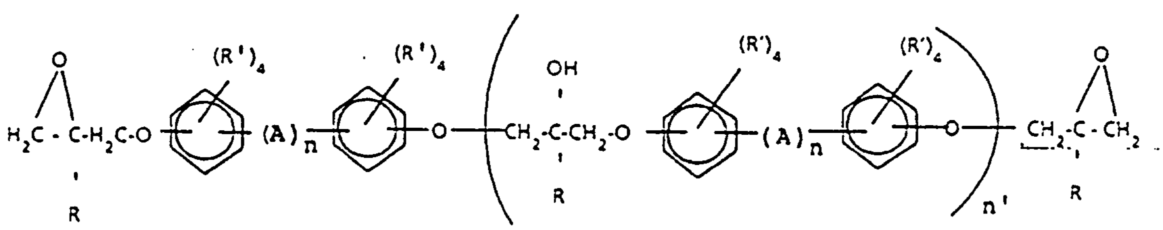

, (II)

wherein A, R, R', n and n' are as defined in Claim 2.

9. A process for preparation of an advanced epoxy cationic resin from an epoxy resin composition having terminal oxirane groups which process includes the step of converting oxirane groups to cationic groups by reacting a nucleophilic compound with at least some of the oxirane groups of the epoxy resin composition wherein an organic acid and water are added simultaneously with or subsequently to the addition of the nucleophile, characterized by using as the epoxy resin composition an advanced epoxy resin obtained by reacting in the presence of a suitable catalyst

60 to 90 weight percent of glycidyl ethers (A) comprising:

(A-1) at least one diglycidylether of a diol which is a diglycidyl ether of a polyetherdiol, a diglycidyl ether of an aliphatic diol essentially free of ether oxygen atoms or a diglycidyl ether of an oxyalkylated diol, and

(A-2) a diglycidylether of a dihydric phenol,with

40 to 10 weight percent of a dihydric phenol (B),

wherein (A-1) and (A-2) are employed in such quantities that 10 to 75 weight percent of the glycidyl

ethers (A) are contributed by component (A-1) and from 25 weight percent to about 90 weight percent of the glycidyl ethers are contributed by component (A-2), and components (A) and (B) are employed in such quantities that the resultant epoxide equivalent weight is from 350 to 10,000; whereby there is obtained a cationic, advanced epoxy resin having a charge density of from 0.2 to 0.6 milliequivalent of charge per gram of resin.

**10.** The process of Claim 9 in which the diglycidyl ether of a diol has the structural formula

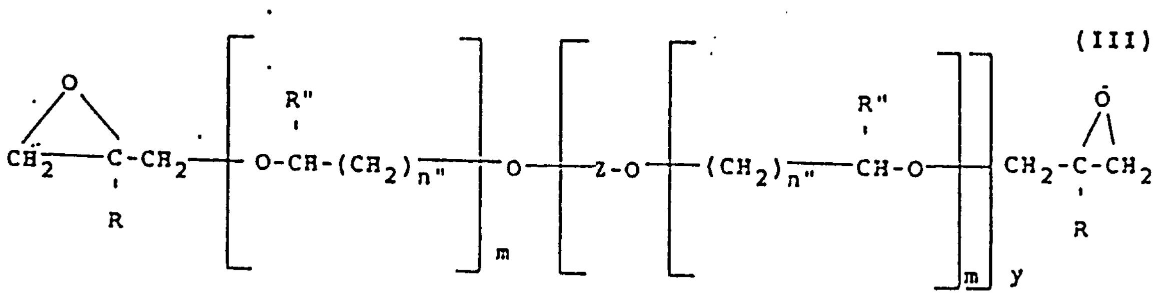

(III)

wherein each R is independently hydrogen or a hydrocarbyl group having from 1 to 3 carbon atoms; each R" is hydrogen or an alkyl group having from 1 to 6 carbon atoms, m is an integer from 0 to 50; n" has a value of 1 to 3; y is 0 or 1; and Z is a divalent aliphatic or cycloaliphatic group having from 2 to 20 carbon atoms or one of the groups represented by the formulas

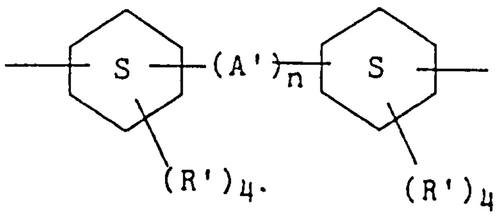

,

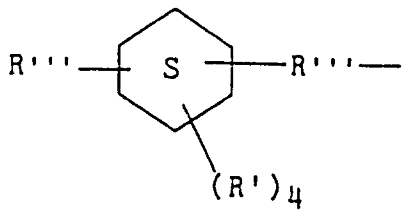

,

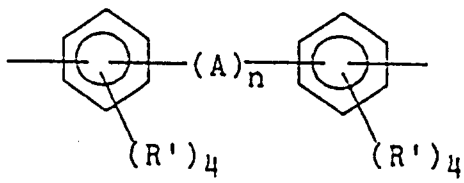

,

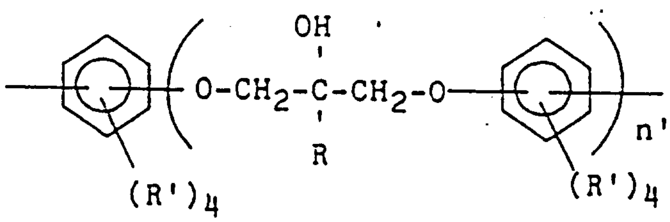

,

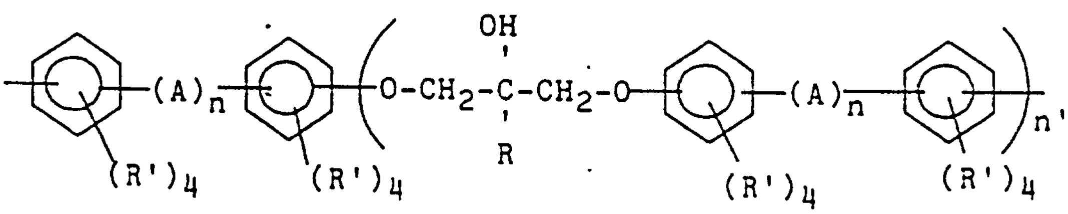

or

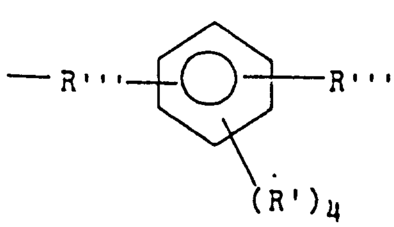

wherein R and R" are defined as hereinbefore; A' and R''' are divalent hydrocarbon groups having from 1 to about 6 carbon atoms; A is a divalent hydrocarbon group having from 1 to 12 carbon atoms,

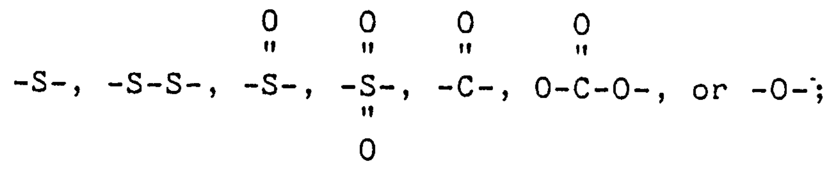

each R' is independently hydrogen, a hydrocarbyl or hydrocarbyloxy group having from 1 to 4 carbon atoms, or a halogen; n has a value from 0 to 1; and n' has a value from 0 to 10.

**11.** The process of Claim 10 wherein the diglycidyl ether of the diol is the diglycidyl ether of a polyetherdiol having the structural formula

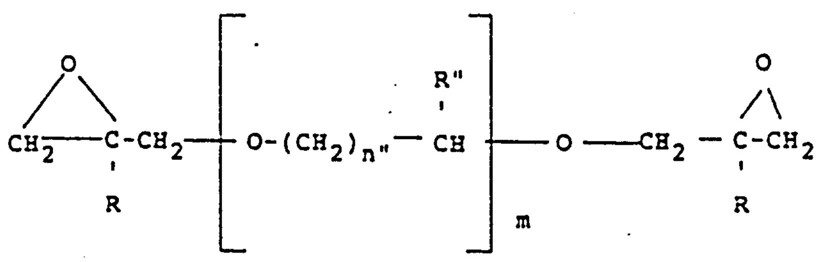

V

wherein m is an integer from 2 to 50 and R, R" and n" are as defined in Claim 10.

**12.** The process of Claim 10 wherein the diglycidyl ether of the diol is the diglycidyl ether of an aliphatic diol essentially free of ether oxygen atoms having the structural formula

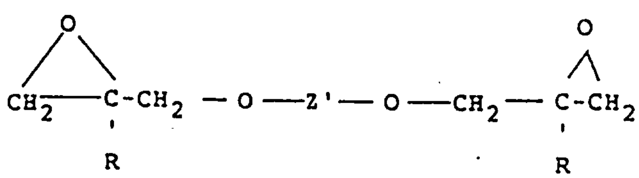

VII

wherein Z' is a divalent aliphatic or cycloaliphatic group having from 2 to 20 carbon atoms or one of the groups represented by the structural formulas

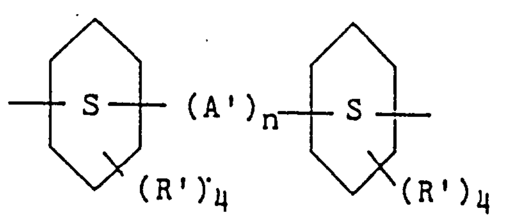

or

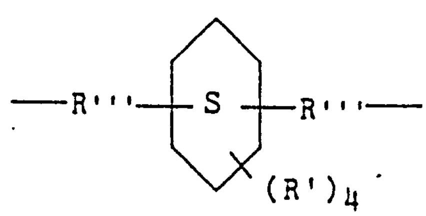

each R' is independently hydrogen or a hydrocarbyl group having from 1 to 4 carbon atoms; and each R, R''', A' and n are as defined in Claim 10.

**13.** The process of Claim 10 wherein the diglycidyl ether of the diol is the diglycidyl ether of an oxyalkylated diol having the structural formula

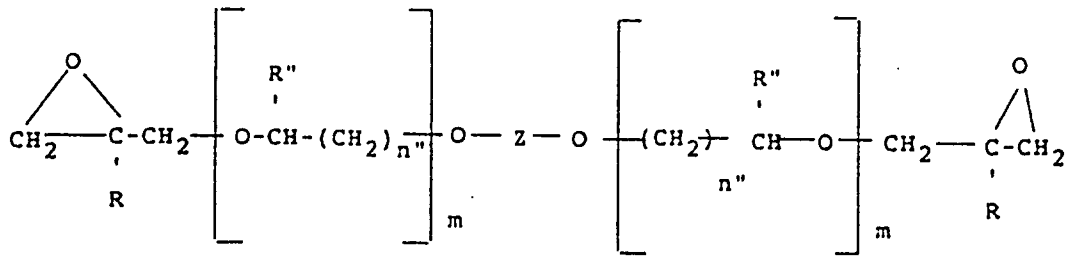

IX

wherein m is an integer from 1 to 25; and R, R', R", R"', A, A', Z, n, n' and n" are as defined in Claim 10.

**14.** The process of any one of Claims 9 to 13 wherein the diglycidyl ether of a dihydric phenol has the structural formula

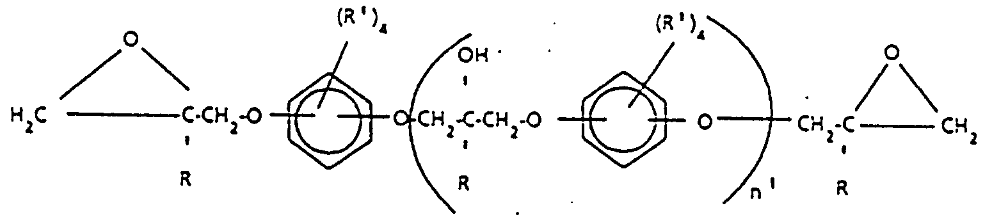

(I)

or

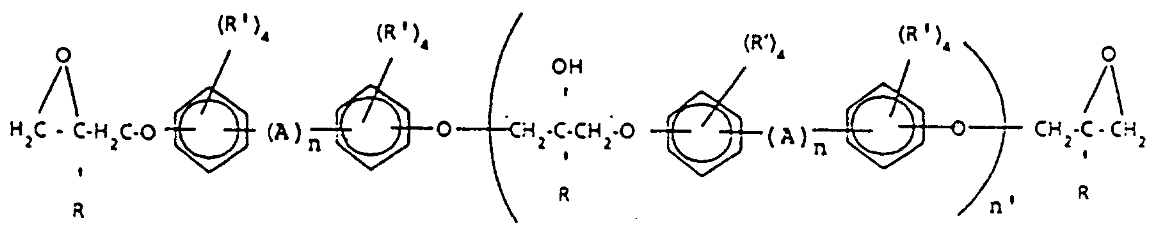

(II)

wherein A, R, R', n and n' are as defined in Claim 10.

**15.** The process of any one of Claims 9 to 13 in which the advanced epoxy resin, before conversion to a cationic resin, has an oxirane content of from 1 to 5 percent based on the total weight of the resin.

**16.** The process of Claim 9 or 10 in which a monofunctional capping agent, component (C), is combined with components (A) and (B).

**17.** The process of Claim 16 in which the monofunctional capping agent is a monofunctional phenol which is used in an amount of from 1 to 15 percent based on the total weight of components (A) and (B).

**18.** A coating composition which is suitable for electrodeposition comprising an aqueous dispersion of the advanced epoxy cationic resin of Claim 1 in combination with a crosslinking agent selected from a blocked polyisocyanate, an amine aldehyde resin, a phenol aldehyde resin and a polyester resin.

**19.** The coating composition of Claim 18 which also contains a pigment.

**20.** The use of the advanced epoxy cationic resin of Claim 1 or 2 in electrodeposition coating compositions.

## Patentansprüche

1. Verlängertes, kationisches Epoxydharz, hergestellt durch Bildung eines verlängerten Epoxydharzes, das endständige Oxirangruppen trägt, und nachfolgende Umwandlung wenigstens eines Teiles der endständigen Oxirangruppen des verlängerten Epoxydharzes in kationische Gruppen durch Reaktion des Harzes mit einer nucleophilen Verbindung zur Bildung eines kationischen Platzes in dem Molekül und Zugabe einer organischen Säure und Wasser gleichzeitig mit der oder anschließend an die Zugabe der nucleophilen Verbindung, dadurch gekennzeichnet, daß die Zusammensetzung des verlängerten, kationischen Epoxydharzes eine Ladungsdichte von 0,2 bis 0,6 Milliäquivalent an kationischer Ladung pro g an Harz hat, und daß das verlängerte Epoxydharz durch Umsetzung in Anwesenheit eines geeigneten Katalysators von:
   60 bis 90 Gew.-% Glycidylethern (A), umfassend:
      (A-1) wenigstens einen Diglycidylether eines Diols, der ein Diglycidylether eines Polyetherdiols ist, einen Diglycidylether eines aliphatischen Diols, das im wesentlichen frei von Ethersauerstoffatomen ist, oder einen Diglycidylether eines oxyalkylierten Diols und
      (A-2) einen Diglycidylether eines zweiwertigen Phenols,
   mit
   40 bis 10 Gew.-% eines zweiwertigen Phenols (B),
   hergestellt worden ist,
   worin (A-1) und (A-2) in solchen Mengen eingesetzt werden, daß 10 bis 75 Gew.-% der Glycidylether (A) durch die Komponente (A-1) beigesteuert werden und von 25 Gew.-% bis etwa 90 Gew.-% der Glycidylether durch die Komponente (A-2) beigesteuert werden, und die Komponenten (A) und (B) in solchen Mengen eingesetzt werden, daß das erhaltene Epoxidäquivalentgewicht von 350 bis 10.000 beträgt.

2. Verlängertes, kationisches Epoxydharz nach Anspruch 1, worin der Diglycidylether eines Diols die Strukturformel besitzt:

(III)

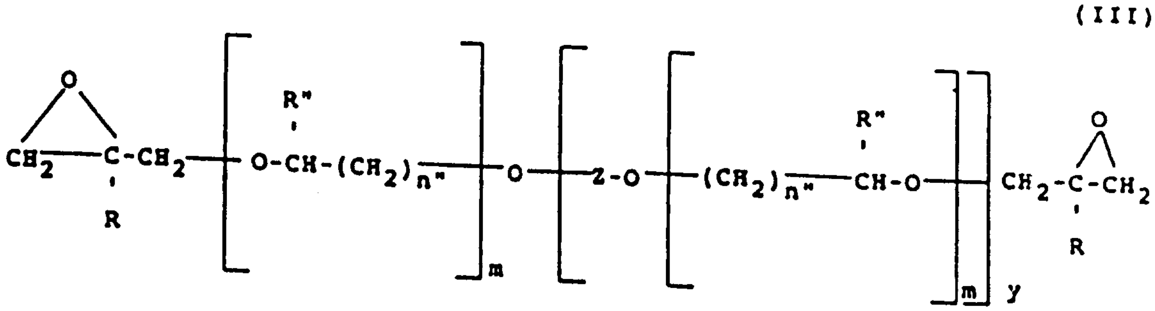

   worin jedes R unabhängig voneinander Wasserstoff oder eine Hydrocarbylgruppe mit 1 bis 3 Kohlenstoffatomen ist; jedes R" Wasserstoff oder eine Alkylgruppe mit 1 bis 6 Kohlenstoffatomen ist; m eine ganze Zahl von 0 bis 50 ist; n" einen Wert von 1 bis 3 besitzt; y = 0 oder 1 ist; und Z eine zweiwertige, aliphatische oder cycloaliphatische Gruppe mit 2 bis 20 Kohlenstoffatomen oder eine durch die folgenden Formeln wiedergegebene Gruppe ist:

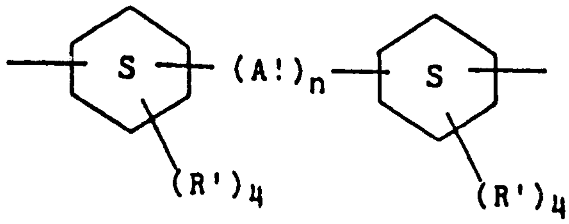
,

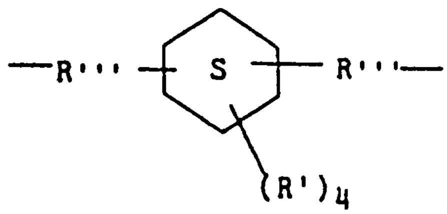
,

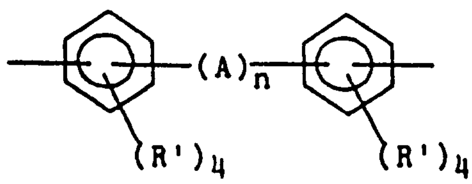
,

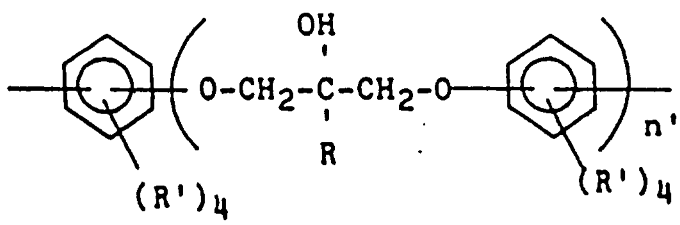
,

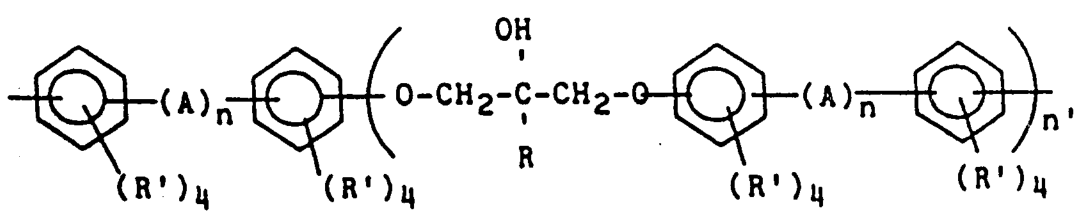
,

oder

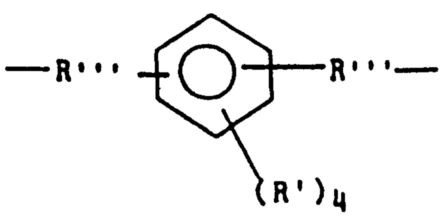

worin R und R" die zuvor angegebene Bedeutung haben; A' und R"' zweiwertige Kohlenwasserstoffgruppen mit von 1 bis etwa 6 Kohlenstoffatomen sind; A eine zweiwertige Kohlenwasserstoffgruppe mit

1 bis 12 Kohlenstoffatomen,

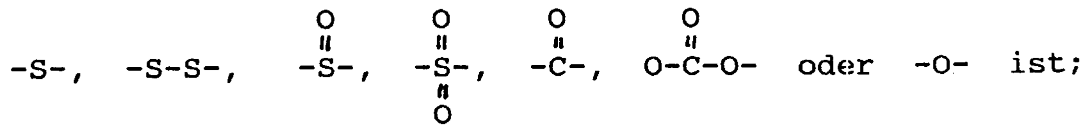

jedes R' unabhängig voneinander Wasserstoff, eine Hydrocarbyl- oder Hydrocarbyloxygruppe mit 1 bis 4 Kohlenstoffatomen oder ein Halogen ist; n einen Wert von 0 bis 1 hat; und n' einen Wert von 0 bis 10 hat.

**3.** Verlängertes, kationisches Epoxydharz nach Anspruch 2, worin der Diglycidylether des Diols der Diglycidylether eines Polyetherdiols der folgenden Strukturformel ist:

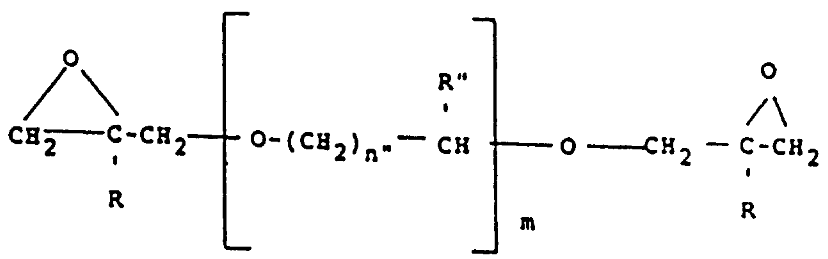

V

worin m eine ganze Zahl von 2 bis 50 ist; und R, R" und n" die in Anspruch 2 angegebene Bedeutung besitzen.

**4.** Verlängertes, kationisches Epoxydharz nach Anpsruch 2, worin der Diglycidylether des Diols der Diglycidylether eines aliphatischen, im wesentlichen von Ethersauerstoffatomen freien Diols ist, das die Strukturformel besitzt:

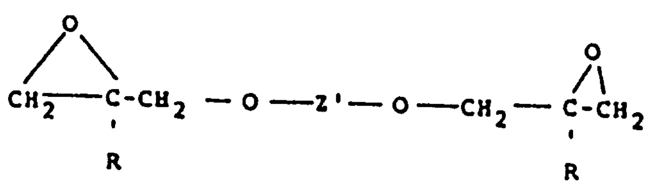

VII

worin Z' eine zweiwertige, aliphatische oder cycloaliphatische Gruppe mit 2 bis 20 Kohlenstoffatomen oder eine der durch die folgenden Strukturformeln wiedergegebenen Gruppen ist:

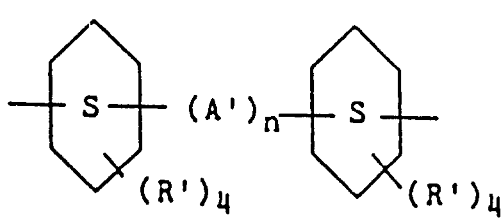

oder

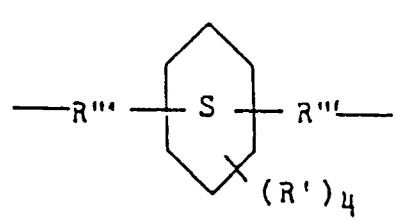

worin jedes R' unabhängig voneinander Wasserstoff oder eine Hydrocarbylgruppe mit 1 bis 4 Kohlenstoffatomen ist; und jedes R, R"', A' und n die in Anspruch 2 angegebene Bedeutung besitzen.

**5.** Verlängertes, kationisches Epoxydharz nach Anspruch 2, worin der Diglycidylether des Diols der Diglycidylether eines oxyalkylierten Diols der folgenden Strukturformel ist:

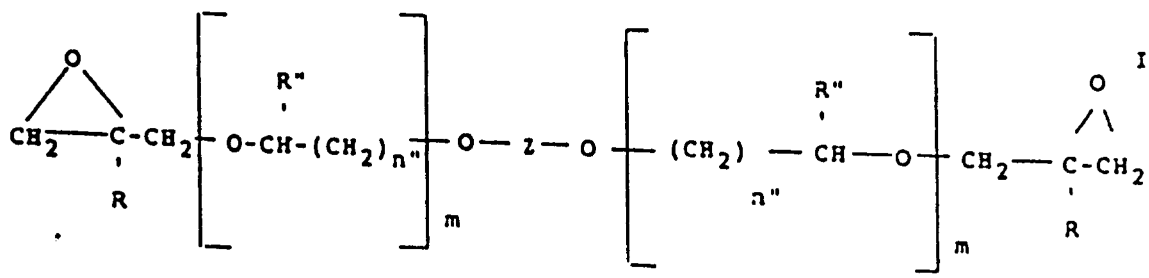

IX

worin m eine ganze Zahl von 1 bis 25 ist; und R, R', R", R"', A, A', Z, n, n' und n" die in Anspruch 2 angegebene Bedeutung besitzen.

6. Verlängertes, kationisches Epoxydharz nach einem der Ansprüche 1 bis 5, worin ein monofunktionelles Kappenmittel, Komponente (C), mit den Komponenten (A) und (B) umgesetzt wird.

7. Verlängertes, kationisches Epoxydharz nach Anspruch 6, worin dieses monofunktionelle Kappenmittel ein monofunktionelles Phenol ist.

8. Verlängertes, kationisches Epoxydharz nach einem der Ansprüche 1 bis 5, worin der Diglycidylether eines zweiwertigen Phenols die Strukturformel besitzt:

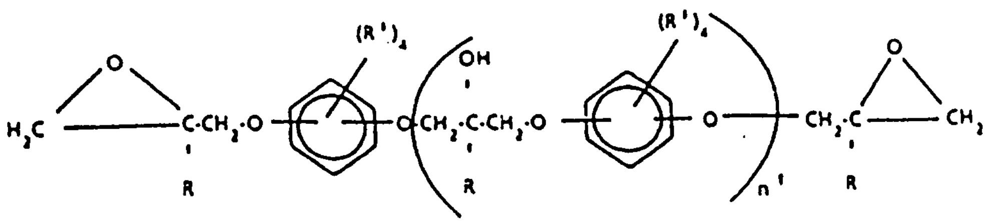

(I)

oder

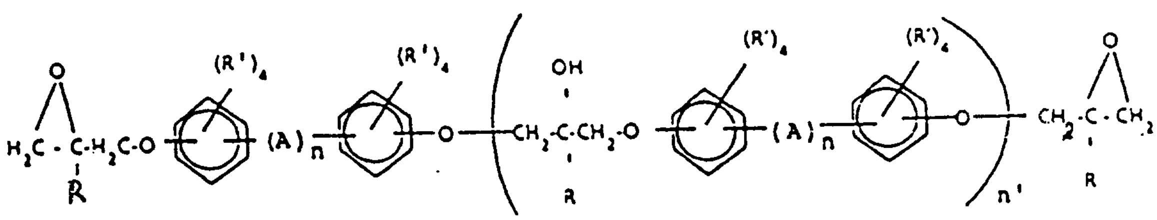

worin R, R', n und n' die in Anspruch 2 angegebene Bedeutung besitzen.

9. Verfahren zur Herstellung eines verlängerten, kationischen Epoxydharzes aus einer Epoxydharzzusammensetzung, welche endständige Oxirangruppen trägt, wobei das Verfahren die Stufe der Umwandlung von Oxirangruppen zu kationischen Gruppen durch Umsetzung einer nucleophilen Verbindung mit wenigstens einigen der Oxirangruppen der Epoxydharzzusammensetzung einschließt, bei welchem eine organische Säure und Wasser gleichzeitig mit der oder anschließend an die Zugabe der nucleophilen Verbindung zugesetzt werden, dadurch gekennzeichnet, daß als Epoxydharzzusammensetzung ein verlängertes Epoxydharz verwendet wird, das durch Umsetzung in Anwesenheit eines geeigneten Katalysators von:

60 bis 90 Gew.-% Glycidylethern (A), umfassend:

(A-1) wenigstens einen Diglycidylether eines Diols, der ein Diglycidylether eines Polyetherdiols ist, einen Diglycidylether eines aliphatischen Diols, das im wesentlichen frei von Ethersauerstoffatomen ist, oder einen Diglycidylether eines oxyalkylierten Diols und

(A-2) einen Diglycidylether eines zweiwertigen Phenols,

mit

40 bis 10 Gew.-% eines zweiwertigen Phenols (B),
hergestellt worden ist,
worin (A-1) und (A-2) in solchen Mengen eingesetzt werden, daß 10 bis 75 Gew.-% der Glycidylether (A) durch die Komponente (A-1) beigesteuert werden und von 25 Gew.-% bis etwa 90 Gew.-% der Glycidylether durch die Komponente (A-2) beigesteuert werden, und die Komponenten (A) und (B) in solchen Mengen eingesetzt werden, daß das erhaltene Epoxidäquivalentgewicht von 350 bis 10.000 beträgt, wodurch ein kationisches, verlängertes Epoxydharz mit einer Ladungsdichte von 0,2 bis 0.6 Milliäquivalent Ladung pro g Harz erhalten wird.

**10.** Verfahren nach Anspruch 9, worin der Diglycidylether eines Diols die Strukturformel besitzt:

(III)

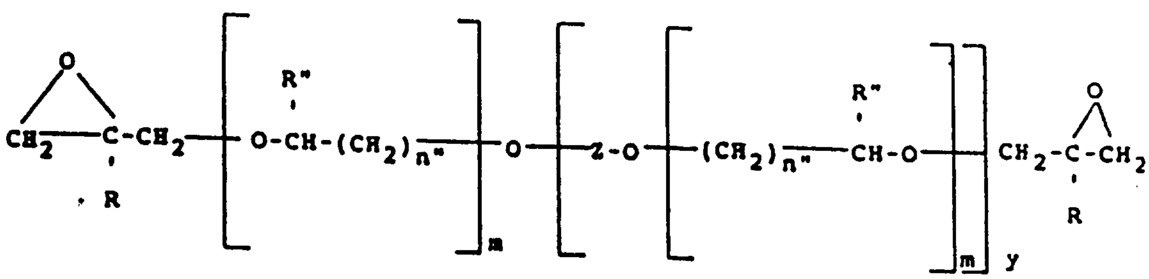

worin jedes R unabhängig voneinander Wasserstoff oder eine Hydrocarbylgruppe mit 1 bis 3 Kohlenstoffatomen ist; jedes R" Wasserstoff oder eine Alkylgruppe mit 1 bis 6 Kohlenstoffatomen ist; m eine ganze Zahl von 0 bis 50 ist; n" einen Wert von 1 bis 3 besitzt; y = 0 oder 1 ist; und Z eine zweiwertige, aliphatische oder cycloaliphatische Gruppe mit 2 bis 20 Kohlenstoffatomen oder eine durch die folgenden Formeln wiedergebene Gruppe ist:

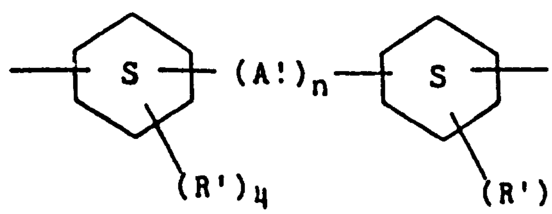
,

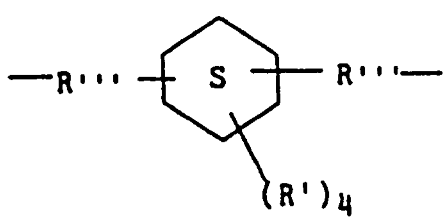
,

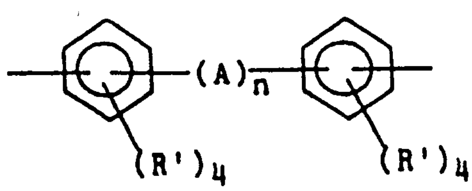
,

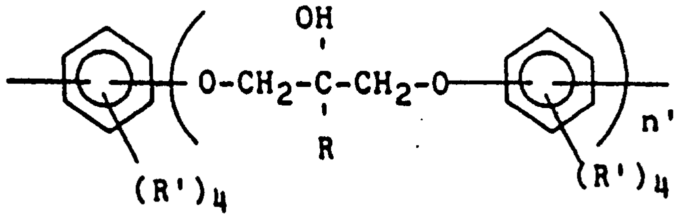 ,

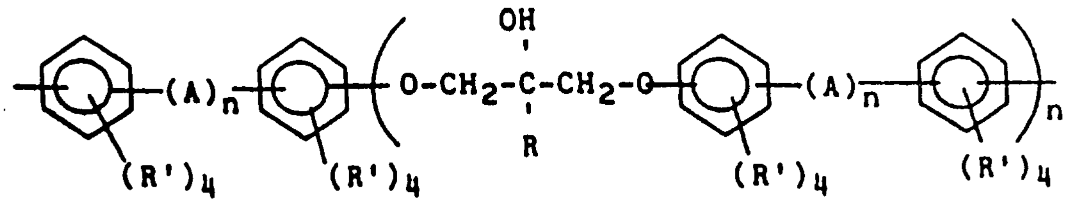

oder

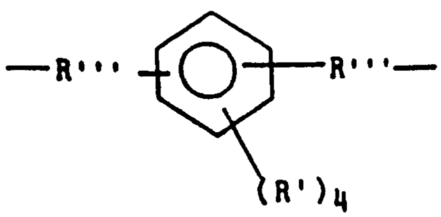

worin R und R" die zuvor angegebene Bedeutung haben; A' und R"' zweiwertige Kohlenwasserstoffgruppen mit von 1 bis etwa 6 Kohlenstoffatomen sind; A eine zweiwertige Kohlenwasserstoffgruppe mit 1 bis 12 Kohlenstoffatomen,

-S-, -S-S-, 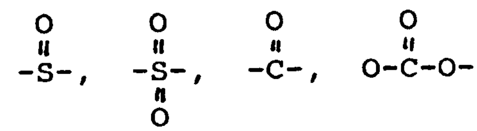 oder -O- ist;

jedes R' unabhängig voneinander Wasserstoff, eine Hydrocarbyl- oder Hydrocarbyloxygruppe mit 1 bis 4 Kohlenstoffatomen oder ein Halogen ist; n einen Wert von 0 bis 1 hat; und n' einen Wert von 0 bis 10 hat.

**11.** Verfahren nach Anspruch 10, worin der Diglycidylether des Diols der Diglycidylether eines Polyetherdiols der folgenden Strukturformel ist:

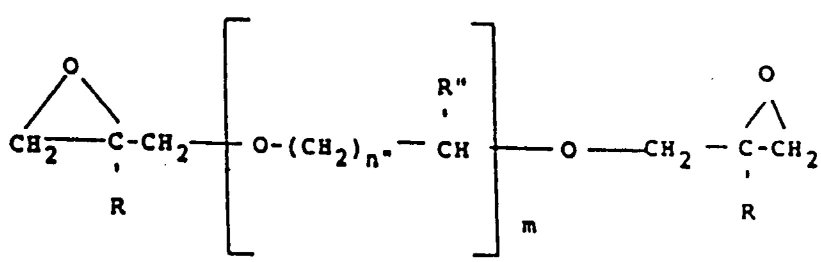 V

worin m eine ganze Zahl von 2 bis 50 ist; und R, R" und n" die in Anspruch 10 angegebene Bedeutung besitzen.

12. Verfahren nach Anspruch 10, worin der Diglycidylether des Diols der Diglycidylether eines aliphatischen, im wesentlichen von Ethersauerstoffatomen freien Diols ist, das die Strukturformel besitzt:

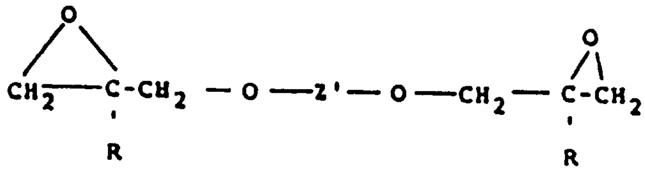

VII

worin Z' eine zweiwertige, aliphatische oder cycloaliphatische Gruppe mit 2 bis 20 Kohlenstoffatomen oder eine der durch die folgenden Strukturformeln wiedergegebenen Gruppen ist:

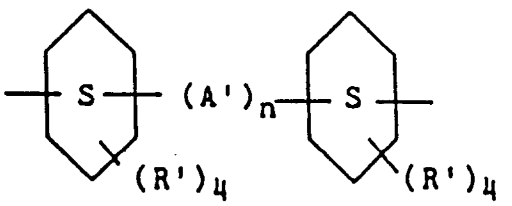

oder

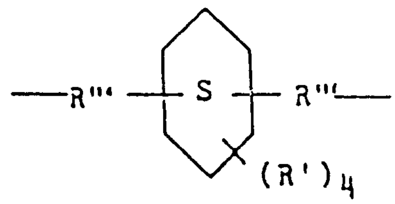

worin jedes R' unabhängig voneinander Wasserstoff oder eine Hydrocarbylgruppe mit 1 bis 4 Kohlenstoffatomen ist; und jedes R, R"', A' und n die in Anspruch 10 angegebene Bedeutung besitzen.

13. Verfahren nach Anspruch 10, worin der Diglycidylether des Diols der Diglycidylether eines oxyalkylierten Diols der folgenden Strukturformel ist:

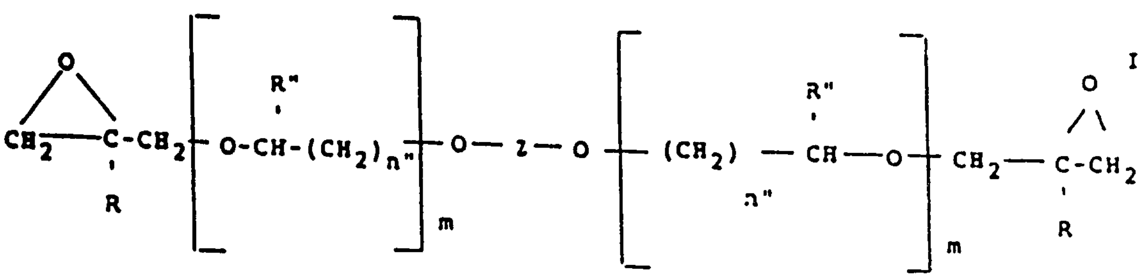

IX

worin m eine ganze Zahl von 1 bis 25 ist; und R, R', R", R"', A, A', Z, n, n' und n" die in Anspruch 10 angegebene Bedeutung besitzen.

14. Verfahren nach einem der Ansprüche 9 bis 13, worin der Diglycidylether eines zweiwertigen Phenols die Strukturformel besitzt:

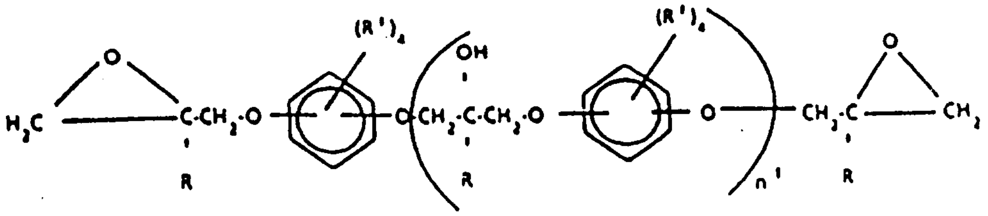 (I)

oder

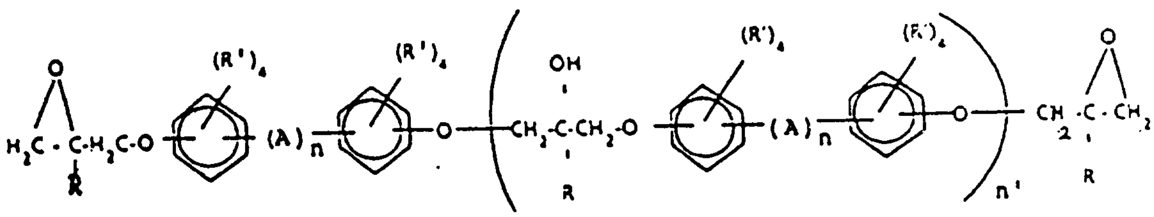

worin A, R, R', n und n' die in Anspruch 10 angegebene Bedeutung besitzen.

**15.** Verfahren nach einem der Ansprüche 9 bis 13, worin das verlängerte Epoxydharz, vor der Umwandlung zu einem kationischen Harz, einen Oxirangehalt von 1 bis 5 %, bezogen auf das Gesamtgewicht des Harzes, aufweist.

**16.** Verfahren nach Anspruch 9 oder 10, worin ein monofunktionelles Kappenmittel, Komponente (C), mit den Komponenten (A) und (B) kombiniert wird.

**17.** Verfahren nach Anspruch 16, worin das monofunktionelle Kappenmittel ein monofunktionelles Phenol ist, welches in einer Menge von 1 bis 15 %, bezogen auf das Gesamtgewicht der Komponenten (A) und (B), verwendet wird.

**18.** Beschichtungszusammensetzung, die für Elektroabscheidung geeignet ist, umfassend eine wässrige Dispersion des verlängerten, kationischen Epoxydharzes von Anspruch 1 in Kombination mit einem Vernetzungsmittel, ausgewählt aus einem geblockten Polyisocyanat, einem Aminaldehydharz, einem Phenolaldehydharz und einem Polyesterharz.

**19.** Beschichtungszusammensetzung nach Anspruch 18, welche ebenfalls ein Pigment enthält.

**20.** Verwendung des verlängerten, kationischen Epoxydharzes von Anspruch 1 oder 2 in Beschichtungszusammensetzungen für die Elektroabscheidung.

**Revendications**

**1.** Composition de résine époxy cationique à chaîne allongée, que l'on prépare en formant une résine époxy à chaîne allongée comportant des groupes oxirane terminaux, en convertissant ensuite au moins une partie de ces groupes oxirane terminaux de la résine époxy à chaîne allongée en des groupes cationiques en faisant réagir la résine avec un composé nucléophile pour former un site cationique dans la molécule, et en ajoutant un acide organique et de l'eau, en même temps que le nucléophile ou après celui-ci, caractérisée en ce que la composition de résine époxy cationique à chaîne allongée présente une densité de charge de 0,2 à 0,6 milliéquivalent de charge cationique par gramme de résine et en ce qu'on prépare la résine époxy à chaîne allongée en faisant réagir, en présence d'un catalyseur convenable,
de 60 à 90 % en poids d'éthers glycidyliques (A) comprenant :
(A-1)au moins un éther diglycidylique de diol, qui est un éther diglycidylique d'un polyétherdiol, un éther diglycidylique d'un diol aliphatique ne comportant pratiquement pas d'atomes d'oxygène en fonction éther, ou un éther diglycidylique d'un diol oxyalkylé, et

(A-2)un éther diglycidylique d'un diphénol,
avec de 40 à 10 % en poids d'un diphénol (B),
(A-1) et (A-2) étant utilisés en des quantités telles que de 10 à 75 % en poids des éthers glycidyliques (A) sont apportés par le composant (A-1) et de 25 à environ 90 % en poids des éthers glycidyliques sont apportés par le composant (A-2), et les composants (A) et (B) étant utilisés en des quantités telles que le poids d'équivalent époxyde de la résine obtenue vaut de 350 à 10 000.

**2.** Résine époxy cationique à chaîne allongée, conforme à la revendication 1, dans laquelle l'éther diglycidylique de diol présente la formule structurale :

(III)

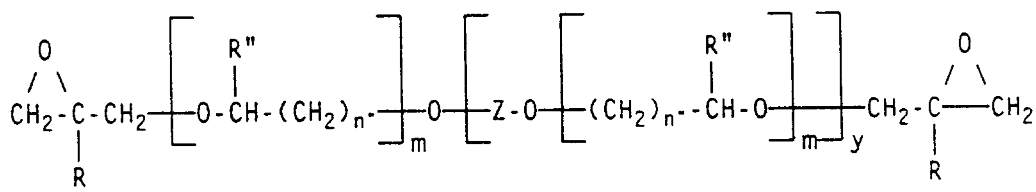

dans laquelle chaque R représente indépendamment un atome d'hydrogène ou un groupe hydrocarboné comportant de 1 à 3 atomes de carbone, chaque R" représente un atome d'hydrogène ou un groupe alkyle comportant de 1 à 6 atomes de carbone, m représente un nombre entier valant de 0 à 50, n" vaut de 1 à 3, Y vaut 0 ou 1, et Z représente un groupe divalent aliphatique ou cycloaliphatique, comportant de 2 à 20 atomes de carbone, ou l'un des groupes représentés par les formules :

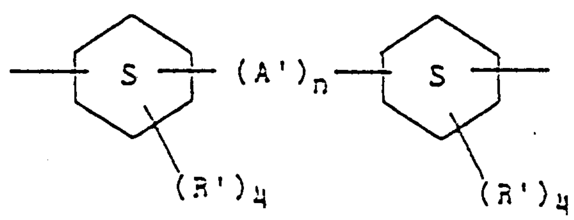

,

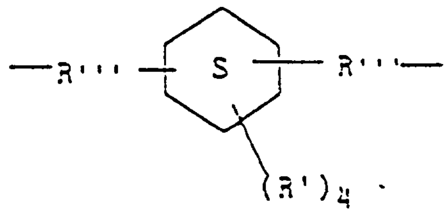

,

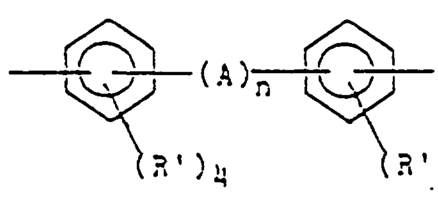

,

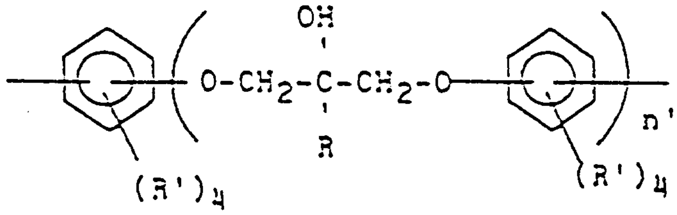

,

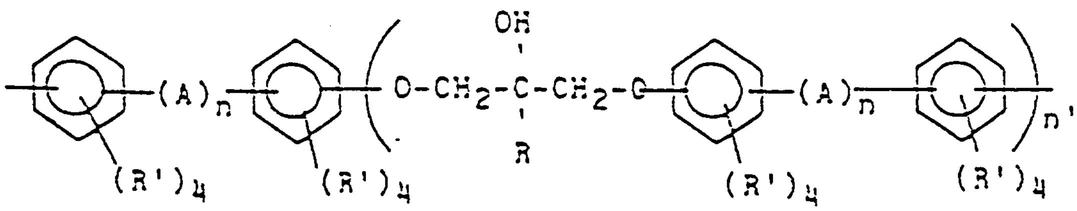

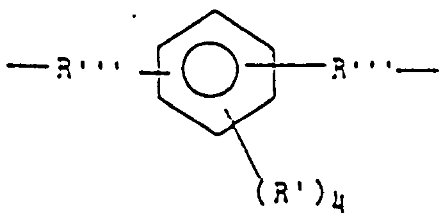

dans lesquelles R et R" ont les mêmes définitions que ci-dessus, A' et R"' représentent des groupes hydrocarbonés divalents comportant de 1 à environ 6 atomes de carbone, A représente un groupe hydrocarboné divalent comportant de 1 à 12 atomes de carbone, -S-, -S-S-, -SO-, $-SO_2-$, -CO-, -O-CO-O- ou -O-, chaque R' représente indépendamment un atome d'hydrogène ou d'halogène ou un groupe hydrocarboné ou hydrocarboné-oxy comportant de 1 à 4 atomes de carbone, n vaut de 0 à 1, et n' vaut de 0 à 10.

**3.** Résine époxy cationique à chaîne allongée, conforme à la revendication 2, dans laquelle l'éther diglycidylique de diol est l'éther diglycidylique d'un polyétherdiol présentant la formule structurale :

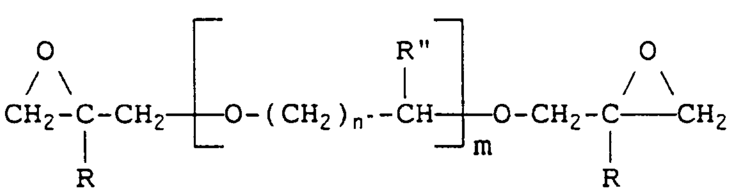 (V)

dans laquelle m représente un nombre entier valant de 2 à 50 et R, R" et n" ont les mêmes définitions que dans la revendication 2.

**4.** Résine époxy cationique à chaîne allongée, conforme à la revendication 2, dans laquelle l'éther diglycidylique de diol est l'éther diglycidylique d'un diol aliphatique ne comportant pratiquement pas d'atomes d'oxygène en fonction éther et présentant la formule structurale :

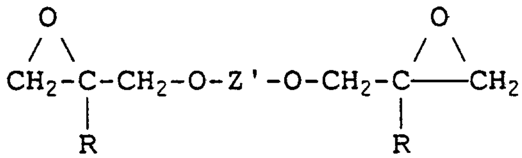

(VII)

dans laquelle Z' est un groupe divalent aliphatique ou cycloaliphatique, comportant de 2 à 20 atomes de carbone, ou l'un des groupes représentés par les formules structurales :

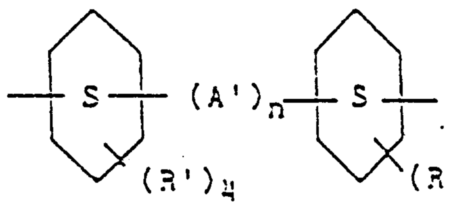

et

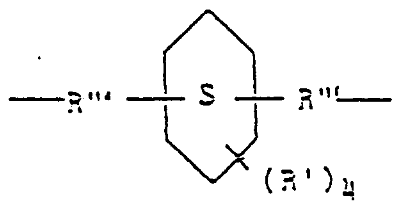

dans lesquelles chaque R' représente indépendamment un atome d'hydrogène ou un groupe hydrocarboné comportant de 1 à 4 atomes de carbone, et chaque R, R"', A et n ont les mêmes définitions que dans la revendication 2.

**5.** Résine époxy cationique à chaîne allongée, conforme à la revendication 2, dans laquelle l'éther diglycidylique de diol est l'éther diglycidylique d'un diol oxyalkylé, présentant la formule structurale :

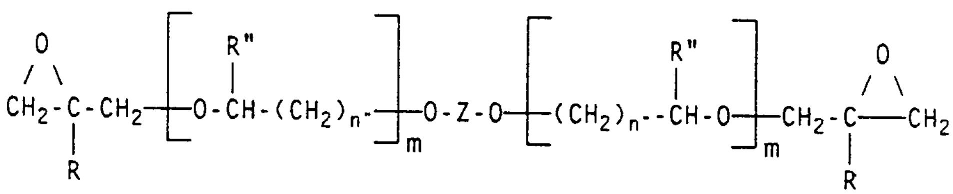

(IX)

dans laquelle m représente un nombre entier valant de 1 à 25, et R, R', R", R"', A, A', Z, n, n' et n" ont les mêmes définitions que dans la revendication 2.

**6.** Résine époxy cationique à chaîne allongée, conforme à l'une quelconque des revendications 1 à 5, dans laquelle on a fait réagir un agent monofonctionnel de coiffage, le composant (C), avec les composants (A) et (B).

**7.** Résine époxy cationique à chaîne allongée, conforme à la revendication 6, dans laquelle ledit agent monofonctionnel de coiffage est un monophénol.

**8.** Résine époxy cationique à chaîne allongée, conforme à l'une quelconque des revendications 1 à 5, dans laquelle l'éther diglycidylique de diphénol présente la formule structurale :

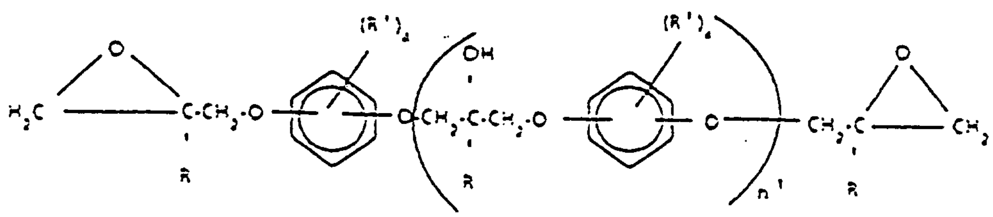

(I)

ou

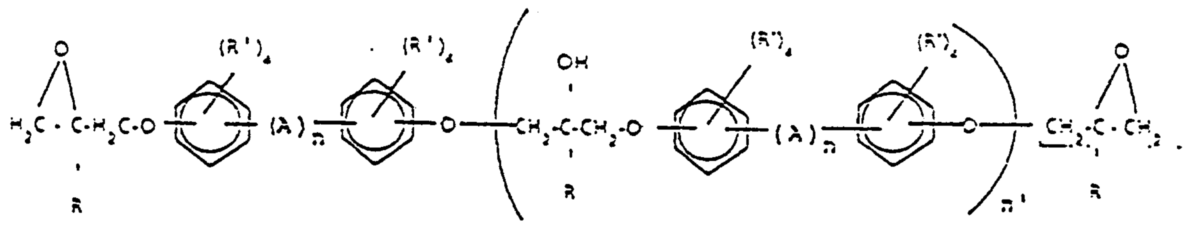

(II)

formules dans lesquelles A, R, R', n et n' ont les mêmes définitions que dans la revendication 2.

**9.** Procédé de préparation d'une résine époxy cationique à chaîne allongée, à partir d'une composition de résine époxy comportant des groupes oxirane terminaux, procédé qui inclut une étape de conversion des groupes oxirane en groupes cationiques par réaction d'un composé nucléophile avec au moins quelques-uns des groupes oxirane de la composition de résine époxy, un acide organique et de l'eau étant ajoutés en même temps que le composé nucléophile ou après celui-ci, caractérisé en ce qu'on utilise une résine époxy à chaîne allongée, que l'on a obtenue en faisant réagir, en présence d'un catalyseur convenable,
de 60 à 90 % en poids d'éthers glycidyliques (A) comprenant :
(A-1)au moins un éther diglycidylique de diol, qui est un éther diglycidylique d'un polyétherdiol, un éther diglycidylique d'un diol aliphatique ne comportant pratiquement pas d'atomes d'oxygène en fonction éther, ou un éther diglycidylique d'un diol oxyalkylé, et
(A-2)un éther diglycidylique d'un diphénol,
avec de 40 à 10 % en poids d'un diphénol (B),
(A-1) et (A-2) étant utilisés en des quantités telles que de 10 à 75 % en poids des éthers glycidyliques (A) sont apportés par le composant (A-1) et de 25 à environ 90 % en poids des éthers glycidyliques sont apportés par le composant (A-2), et les composants (A) et (B) étant utilisés en des quantités telles que le poids d'équivalent époxyde de la résine obtenue vaut de 350 à 10 000, de sorte qu'on obtient une résine époxy cationique à chaîne allongée, présentant une densité de charge de 0,2 à 0,6 milliéquivalent de charge par gramme de résine.

**10.** Procédé conforme à la revendication 9, dans lequel l'éther diglycidylique de diol présente la formule structurale :

(III)

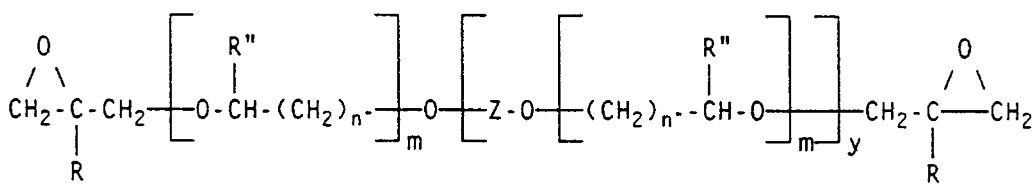

dans laquelle chaque R représente indépendamment un atome d'hydrogène ou un groupe hydrocarboné comportant de 1 à 3 atomes de carbone, chaque R" représente un atome d'hydrogène ou un

groupe alkyle comportant de 1 à 6 atomes de carbone, m représente un nombre entier valant de 0 à 50, n" vaut de 1 à 3, y vaut 0 ou 1, et Z représente un groupe divalent aliphatique ou cycloaliphatique, comportant de 2 à 20 atomes de carbone, ou l'un des groupes représentés par les formules :

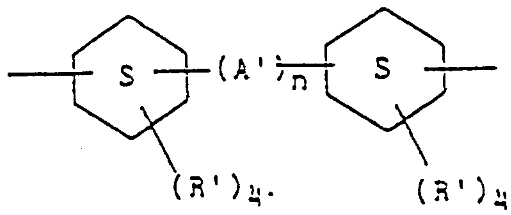

,

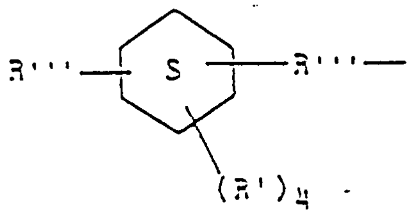

,

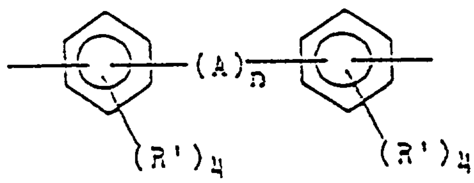

,

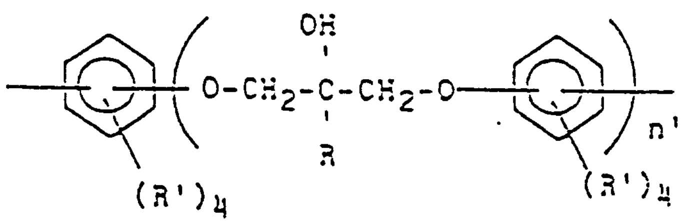

,

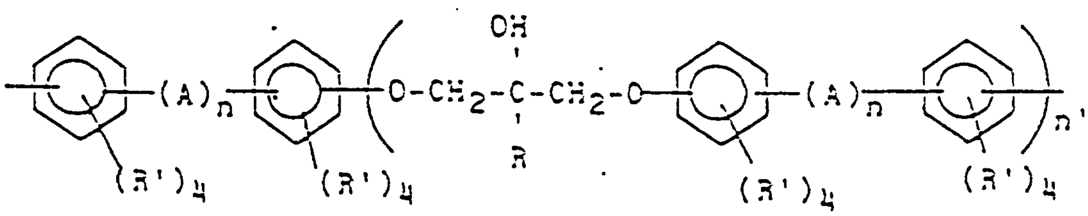

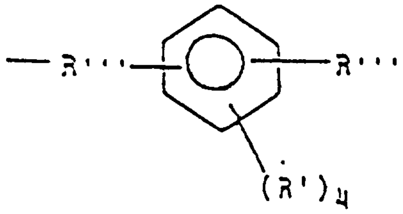

dans lesquelles R et R" ont les mêmes définitions que ci-dessus, A' et R"' représentent des groupes hydrocarbonés divalents comportant de 1 à environ 6 atomes de carbone, A représente un groupe hydrocarboné divalent comportant de 1 à 12 atomes de carbone, -S-, -S-S-, -SO-, $-SO_2-$, -CO-, -O-CO-O- ou -O-, chaque R' représente indépendamment un atome d'hydrogène ou d'halogène ou un groupe hydrocarboné ou hydrocarboné-oxy comportant de 1 à 4 atomes de carbone, n vaut de 0 à 1, et n' vaut de 0 à 10.

**11.** Procédé conforme à la revendication 10, dans lequel l'éther diglycidylique de diol est l'éther diglycidylique d'un polyétherdiol présentant la formule structurale :

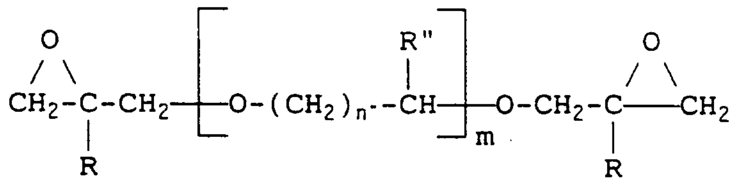

(V)

dans laquelle m représente un nombre entier valant de 2 à 50 et R, R" et n" ont les mêmes définitions que dans la revendication 10.

**12.** Procédé conforme à la revendication 10, dans lequel l'éther diglycidylique de diol est l'éther diglycidylique d'un diol aliphatique ne comportant pratiquement pas d'atomes d'oxygène en fonction éther et présentant la formule structurale :

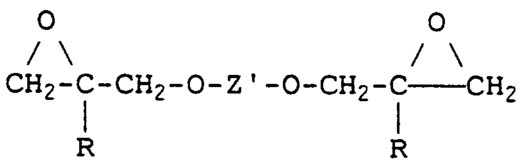

(VII)

dans laquelle Z' est un groupe divalent aliphatique ou cycloaliphatique, comportant de 2 à 20 atomes de carbone, ou l'un des groupes représentés par les formules structurales :

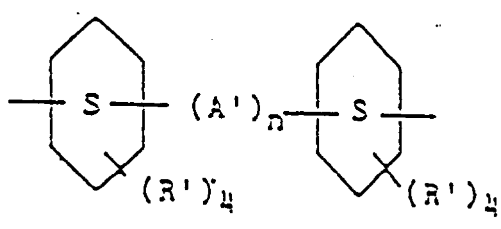

et

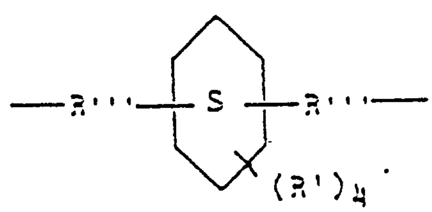

dans lesquelles chaque R' représente indépendamment un atome d'hydrogène ou un groupe hydrocarboné comportant de 1 à 4 atomes de carbone, et chaque R, R"', A et n ont les mêmes définitions que dans la revendication 10.

**13.** Procédé conforme à la revendication 10, dans lequel l'éther diglycidylique de diol est l'éther diglycidylique d'un diol oxyalkylé, présentant la formule structurale :

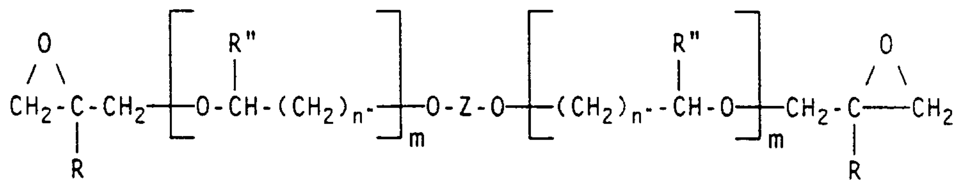 (IX)

dans laquelle m représente un nombre entier valant de 1 à 25, et R, R', R", R"', A, A', Z, n, n' et n" ont les mêmes définitions que dans la revendication 10.

**14.** Procédé conforme à l'une quelconque des revendications 9 à 13, dans laquelle l'éther diglycidylique de diphénol présente la formule structurale :

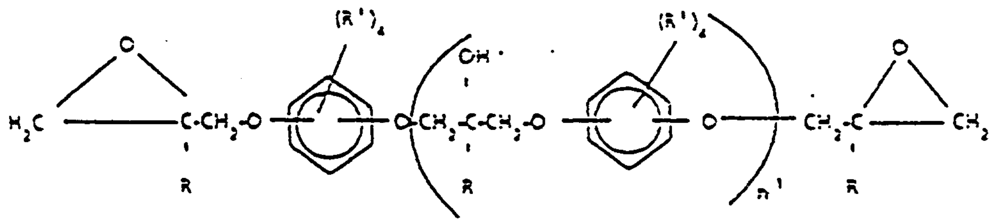 (I)

ou

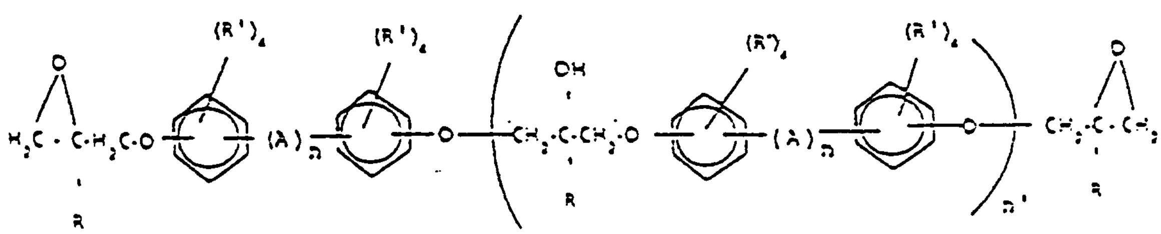

(II)

formules dans lesquelles A, R, R', n et n' ont les mêmes définitions que dans la revendication 10.

**15.** Procédé conforme à l'une quelconque des revendications 9 à 13, dans lequel la résine époxy à chaîne allongée, avant conversion en une résine cationique, présente une teneur en groupes oxirane de 1 à 5 %, par rapport au poids total de la résine.

**16.** Procédé conforme à la revendication 9 ou 10, dans lequel on combine avec les composants (A) et (B) un agent monofonctionnel de coiffage, le composant (C).

**17.** Procédé conforme à la revendication 16, dans lequel l'agent monofonctionnel de coiffage est un monophénol que l'on utilise en une proportion de 1 à 15 % par rapport au poids total des composants (A) et (B).

**18.** Composition de revêtement, adaptée pour un dépôt par électrolyse, comprenant une dispersion aqueuse d'une résine époxy cationique à chaîne allongée, conforme à la revendication 1, en combinaison avec un agent de réticulation choisi parmi un polyisocyanate bloqué, une résine amine-aldéhyde, une résine phénol-aldéhyde, et une résine polyester.

**19.** Composition de revêtement conforme à la revendication 18, qui contient également un pigment.

**20.** Utilisation d'une résine époxy cationique à chaîne allongée, conforme à la revendication 1 ou 2, dans des compositions de revêtement par dépôt électrolytique.